# EUROPEAN PATENT APPLICATION

(11) **EP 3 651 452 A1**
(43) Date of publication of application: **13.05.2020**
(21) Application number: 19216152.9
(22) Date of filing: 21.03.2016
(51) Int. Cl.: H04N 5/765, G06F 16/50, H04N 1/00, H04N 5/45, H04N 21/41, H04N 21/431, H04N 21/436, H04N 21/4363, H04N 21/462, H04N 21/81

(54) **PORTABLE APPARATUS, DISPLAY APPARATUS, AND METHOD FOR DISPLAYING PHOTO THEREOF**

(30) Priority: 21.07.2015 KR 20150103284
(62) Divisional of application: 16161472.2
(71) Applicant: Samsung Electronics Co., Ltd., Gyeonggi-do 16677 (KR)
(72) Inventor: JEONG, Seung-yeon, Seoul (KR); KIM, Soo-hwan, Gyeonggi-do (KR); EO, So-yoon, Suwon-si (KR); YUN, Sang-un, Seoul (KR); KOO, Sung-wan, Seoul (KR); LEE, Min, Seoul (KR)
(74) Representative: Appleyard Lees IP LLP

(57) **Abstract**

A display apparatus includes a communicator configured to receive a first photo from a first portable apparatus and a second photo from a second portable apparatus; a display configured to display the first photo and the second photo; and a controller configured to control the display to display the first photo and the second photo all together in different sizes.

## Description

### CROSS-REFERENCE TO RELATED APPLICATIONS

This application claims priority from Korean Patent Application No. 10-2015-0103284, filed on July 21, 2015, in the Korean Intellectual Property Office, the disclosure of which is incorporated herein by reference in its entirety.

### BACKGROUND

### Field

Apparatuses and methods consistent with exemplary embodiments relate to a portable apparatus, a display apparatus, and a method for displaying a photo of a display apparatus, and more particularly, to a portable apparatus which can share a photo with a display apparatus wirelessly using an application installed therein, and a display apparatus and a method for displaying a photo thereof.

### Description of the Related Art

Display apparatuses including audio output devices (for example, speakers, sound bars, home theaters, desktop computers) which can support wireless connections as well as wired connections are becoming increasingly popular. The wireless display apparatuses can provide wireless convenience and provide various audio contents to users through a codec supporting a high quality sound.

Users can use the display apparatus along with portable apparatuses. For example, the portable apparatus may be a mobile phone, a Personal Digital Assistant (PDA), a tablet PC, a laptop PC, an electronic scheduler, an electronic dictionary, an MP3 player, or any of various other types of devices. In this case, two or more portable apparatuses and the display apparatus may be located in the same space (for example, a living room, a bed room, an office, or other places)

There is a need for a method for using portable apparatuses and a display apparatus more easily and efficiently when the portable apparatuses and the display apparatus are located in the same space.

### SUMMARY

Exemplary embodiments disclosed herein may overcome the above disadvantages and other disadvantages not described above. Also, the exemplary embodiments are not required to overcome the disadvantages described above, and an exemplary embodiment may not overcome any of the problems described above.

According to an aspect of an exemplary embodiment, there is provided a display apparatus including: a display configured to display a photo; a communicator configured to transmit identification information of the display apparatus to a first portable apparatus and a second portable apparatus and to receive the photo; and a controller configured to control the communicator to connect, through an access point, to the first portable apparatus and the second portable apparatus which receive the identification information of the display apparatus, wherein the controller is configured to control to display a first photo which is received from the first portable apparatus through the communicator on the display, after receiving the first photo, control to display a second photo which is received from the second portable apparatus through the communicator on the display, and control to display the first photo and the second photo all together in different sizes.

The controller may be configured to reduce the first photo to generate a reduced image of the first photo and control the display to overlap the reduced image of the first photo with a part of the second photo.

In response to a third photo being received from the first portable apparatus through the communicator, the controller may be configured to reduce the second photo to generate a reduced image of the second photo, and control the display to display the received third photo, and overlap the reduced image of the first photo and the reduced image of the second photo with a part of the third photo.

In response to the first photo being received through the communicator, the controller may be configured to control the display to display identification information of the first portable apparatus which has transmitted the first photo with the first photo.

The controller may be configured to control the display to display identification information of the first portable apparatus which has transmitted the first photo on the reduced image of the first photo.

The controller may be configured to position the reduced image of the first photo and the reduced image of the second photo on the display according to a predetermined order.

The controller may be configured to control the display to display identification information of the first portable apparatus which has transmitted the first photo on the reduced image of the first photo, and display identification information of the second portable apparatus which has transmitted the second photo on the reduced image of the second photo.

In response to a request for a thumbnail image list corresponding to the first photo and the second photo being received from the first portable apparatus through the communicator, the controller may be configured to control the communicator to transmit the thumbnail image list corresponding to the first photo and the eleventh photo to the first portable apparatus.

In response to a request for downloading of the first photo and the second photo being received from the first portable apparatus through the communicator, the controller may be configured to control the communicator to transmit the first photo and the second photo to the first portable apparatus.

In response to a first request for reproduction of the first photo and a second request for reproduction of the second photo being received from the first portable apparatus through the communicator, the controller may be configured to control the display to reproduce the first photo and the second photo as a slide show.

The controller may be configured to control the display to provide feedback corresponding to the first photo displayed on the display, and the feedback may include at least one of visual feedback and auditory feedback.

According to an aspect of another exemplary embodiment, there is provided a portable apparatus including: a touch screen configured to display a photo; a first communicator configured to wirelessly receive identification information of a display apparatus; a second communicator configured to transmit the photo; and a controller configured to control the second communicator to transmit the photo to the display apparatus identified by the identification information received by the first communicator in response to detecting a touch of an icon displayed on the touch screen.

The controller may be configured to control the display to display a display apparatus list including the display apparatus identified by the identification information received by the first communicator in response to the identification information of the display apparatus being received by the first communicator.

The controller may be configured to control the portable apparatus to provide feedback corresponding to transmission of the first photo, and the feedback may include at least one of visual feedback, auditory feedback, and haptic feedback.

The controller may be configured to control the second communicator to request a thumbnail image list regarding photos displayed on the display apparatus in response to detecting a second touch of a second icon displayed on the touch screen.

The controller may be configured to control the second communicator to request reproduction of photos displayed on the display apparatus in response to detecting a third touch of a third icon displayed on the touch screen.

According to an aspect of another exemplary embodiment, there is provided a method for displaying a photo, the method being performed by a display apparatus and including:
transmitting identification information of the display apparatus to a first portable apparatus and a second portable apparatus; connecting, through an access point, to the first portable apparatus which receives the identification information of the display apparatus;
connecting, through the access point, to the second portable apparatus which receives the identification information of the display apparatus; in response to a first photo being received from the first portable apparatus, displaying the first photo on a display of the display apparatus; and in response to a second photo being received from the second portable apparatus, displaying the second photo on the display on which the first photo is displayed, wherein the displaying the second photo comprises displaying the first photo and the second photo all together in different sizes.

The method may further include, in response to a third photo being received from the first portable apparatus, displaying the third photo on the display on which the first photo and the second photo are displayed, reducing the second photo to generate a reduced image of the second photo, and displaying the reduced image of the first photo and the reduced image of the second photo to overlap with a part of the third photo.

The displaying the first photo may further include displaying identification information of the first portable apparatus which has transmitted the first photo on the display.

The displaying the second photo may further include displaying identification information of the first portable apparatus which has transmitted the first photo on the reduced image of the first photo, and displaying identification information of the second portable apparatus which has transmitted the second photo on the reduced image of the second photo.

Additional and/or other aspects and advantages of the exemplary embodiments will be set forth in part in the description which follows and, in part, will be apparent from the description, or may be learned by practice of the exemplary embodiments.

### BRIEF DESCRIPTION OF THE DRAWING FIGURES

The above and/or other aspects of the exemplary embodiments will be more apparent by describing certain exemplary embodiments with reference to the accompanying drawings, in which:
FIG. 1 is a schematic view showing an operation between a plurality of portable apparatuses and a display apparatus according to an exemplary embodiment;
FIGS. 2A and 2B are schematic block diagrams showing a plurality of portable apparatuses and a display apparatus according to an exemplary embodiment;
FIGS. 3A and 3B are schematic flowcharts showing a method for displaying a photo of a plurality of portable apparatuses and a display apparatus according to an exemplary embodiment;
FIG. 3C is a schematic flowchart showing a method for displaying a photo of a plurality of portable apparatuses and a display apparatus according to another exemplary embodiment;
FIG. 3D is a schematic flowchart showing a method for displaying a photo of a plurality of portable apparatuses and a display apparatus according to another exemplary embodiment;
FIG. 4 is a schematic sequence diagram showing a method for displaying a photo of a plurality of portable apparatuses and a display apparatus according to an exemplary embodiment;
FIGS. 5A, 5B, 5C, 5D, 5E, 5F, 5G and 5H are views showing an example of a method for displaying a photo of a plurality of portable apparatuses and a display apparatus according to an exemplary embodiment;
FIGS. 6A, 6B and 6C are views showing an example of a method for displaying a photo of a plurality of portable apparatuses and a display apparatus according to another exemplary embodiment; and
FIGS. 7A, 7B and 7C are views showing an example of a method for displaying a photo of a plurality of portable apparatuses and a display apparatus according to another exemplary embodiment.

### DETAILED DESCRIPTION OF THE EXEMPLARY EMBODIMENTS

Hereinafter, exemplary embodiments will be explained in detail with reference to the accompanying drawings. In addition, a method for manufacturing and using a portable apparatus according to exemplary embodiments will be explained in detail with reference to the accompanying drawings. The same reference numeral or sign used in the drawings indicates a part or an element performing the substantially same function.

Although the terms such as "first" and "second" are used to explain various elements, the elements should not be limited by these terms. These terms are used for the purpose of distinguishing one element from another element. For example, a first element may be named a second element without departing from the scope of exemplary embodiments of the present disclosure, and similarly, a second element may be named a first element without departing from the scope of exemplary embodiments of the present disclosure. The term "and/or" includes a combination of a plurality of relevant items or any item of a plurality of relevant items.

The term "selecting a key (or button)" regarding a key (or button) located (or formed) on a portable apparatus or a display apparatus refers to pressing the key (or button) or touching the key (or button).

An application refers to software which is executed on an Operating System (OS) for a computer or a mobile OS for a portable apparatus and used by a user. For example, the application may include a contacts application, a calendar application, a memo application, an alarm application, a Social Network Service (SNS) application, a chatting application, a map application, a word application, a spread sheet, a music player, or a video player, although is not limited thereto, and may include many other types of applications, including gaming applications, educational applications, and many other types of applications.

According to an exemplary embodiment, the application may refer to software which is executed in a portable apparatus or an external device (for example, a server, a display apparatus, or another type of external device) connected with the portable apparatus wirelessly or through a wire. According to an exemplary embodiment, the application may refer to software which is installed in a portable apparatus and can control a function or an operation of an external device (for example, a server, a display apparatus, or another type of external device) connected with the portable apparatus wirelessly or through a wire. In addition, according to an exemplary embodiment, the application may refer to software which is executed in a portable apparatus in response to a received user input.

Content may be executed in an application of a portable apparatus. For example, the content may include a video file or an audio file which is reproduced in a video player which is one of the applications, a music file which is reproduced in a music player, a photo file which is displayed by a gallery application, a web page file which is displayed on a web browser, a combination thereof, or another type of file. Contents may refer to a set of contents.

The content may include a video file, an audio file, a text file, an image file (for example, a photo), or a web page which is displayed or executed in an application. The term "video" used in exemplary embodiments may have the same meaning as a moving image. In addition, the content may include a video file, an audio file, a text file, an image file, or a web page which is executed in response to a received user input (for example, a touch, a hovering of an object (e.g., a stylus) near a screen, and other types of user input). The content includes a screen of an executed application and a user interface forming the application screen. In addition, the content may include a single content or a plurality of contents.

A widget refers to a mini application which is one of the Graphic User Interfaces (GUIs) for smoothly supporting an interaction between a user and an application or an OS. For example, the widget includes a weather widget, a calculator widget, a clock widget, or other types of widgets.

A touch (including a touch gesture) may be inputted through a user's body or another device, such as an input pen, or another input device.

The terms used in the present application are used for the purpose of explaining exemplary embodiments and are not intended to restrict and/or limit the present disclosure. In addition, the singular forms are intended to include the plural forms as well, unless the context clearly indicates otherwise. In addition, it should be understood that the terms "include" or "have" used in the present application are to indicate the presence of features, numbers, steps, operations, elements, parts, or a combination thereof described in the specifications, and do not preclude the presence or addition of one or more other features, numbers, steps, operations, elements, parts, or a combination thereof.

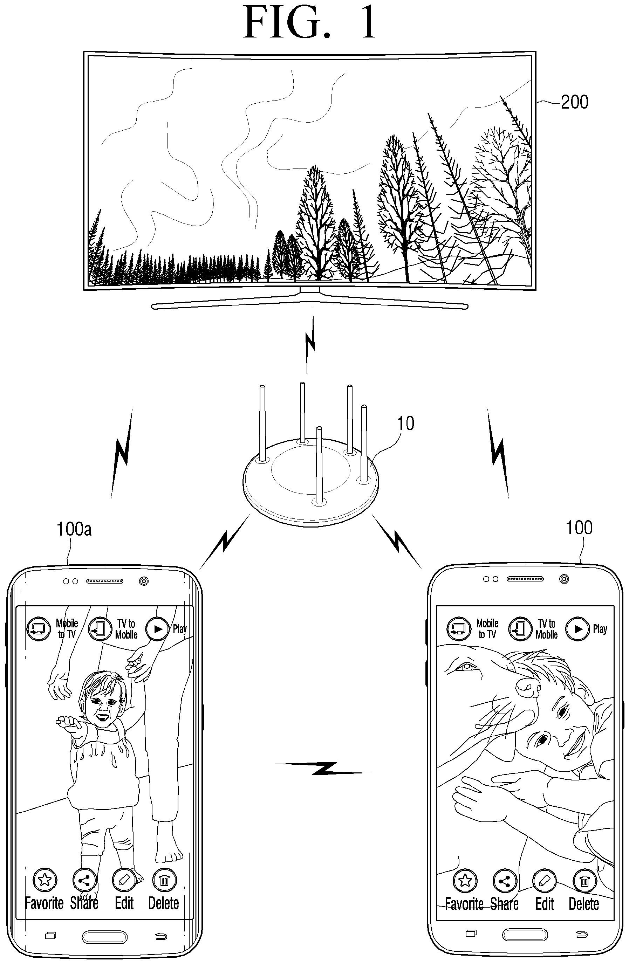

FIG. 1 is a schematic view showing an operation between a plurality of portable apparatuses and a display apparatus according to an exemplary embodiment.

Referring to FIG. 1, an access point 10, one or more portable apparatuses 100, 100a, and/or a display apparatus 200 may be connected with one another wirelessly using their respective communication units. For example, the access point 10, the portable apparatus 100, and/or the display apparatus 200 may be connected with one another in an ad-hoc mode or an infra-structure mode in which wireless connection is established through the access point 10. The display apparatus 200 may be connected with the portable apparatus 100 through a wire. Also, many different combinations of wired and/or wireless connections are possible between the access point 10, the portable apparatus 100, and the display apparatus 200.

The wireless communication techniques may include, but are not limited to, a wireless LAN (WiFi), Bluetooth, Bluetooth low energy, Zigbee, WiFi Direct (WFD), Ultra WideBand (UWB), an Infrared Data Association (IrDA), Near Field Communication (NFC), or Magnetic Security Transmission (MST), etc.

Each of the portable apparatuses 100, 100a may control the function and/or operation of the display apparatus 200 (for example, power on/off, volume control, data transmission or reception (for example, a photo, a video, etc.), network establishment, etc.) using a wireless LAN or short-distance communication (for example, Bluetooth, NFC, etc.).

The display apparatus 200 may be implemented by using an analog TV, a digital TV, a 3D TV, a smart TV, a Light Emitting Diode (LED) TV, an Organic Light Emitting Diode (OLED) TV, a plasma TV, a monitor, a curved TV with a screen of a fixed curvature, a flexible TV with a curvature screen, a bended TV with a screen of a fixed curvature, and/or a curvature variable TV which is able to change a curvature of a current screen in response to a received user input. However, it will be understood by a person skilled in the art that the exemplary embodiments are not limited thereto, and that many different types of display apparatuses may be used in accordance with exemplary embodiments.

The term "user" used in exemplary embodiments refers to a person who controls the functions or operations of the portable apparatus 100 or controls the functions or operations of the display apparatus 200. The user may include a manager or an installation engineer. The user may be a different user according to the portable apparatus 100. For example, the user of the first portable apparatus 100 may be a son (e.g., Sam). The user of the second portable apparatus 100a may be a daughter (e.g., Michelle). The user of a third portable apparatus may be a father (e.g., Sean). The user of a fourth portable apparatus may be a mother (e.g., Elin). The user of a fifth portable apparatus may be a grandfather (e.g., Martin), and the user of a sixth portable apparatus may be a grandmother (e.g., Sienna). In addition, a single user may be the user of a plurality of portable apparatuses 100, or a plurality of users may be the user of a single portable apparatus 100.

A remote control device which is manipulated by user input to control the display apparatus 200 may be used. The remote control device may control the functions of the display apparatus 200 using at least one of a key (including a button), a touch pad, a microphone capable of receiving a user's voice, and a sensor capable of recognizing a motion of the remote control device, which are provided on the remote control device.

According to an exemplary embodiment, the user may easily connect the plurality of portable apparatuses 100, 100a and the display apparatus 200. In response to the portable apparatuses 100, 100a and the display apparatus 200 being connected with each other, the user may transmit the content of the portable apparatus to the display apparatus 200, and the display apparatus 200 may add various screen effects, background music, etc. to the transmitted photo, so that the user can enjoy the content with other users. The display apparatus 200 may classify, store and use the content in various ways using content information corresponding to the content.

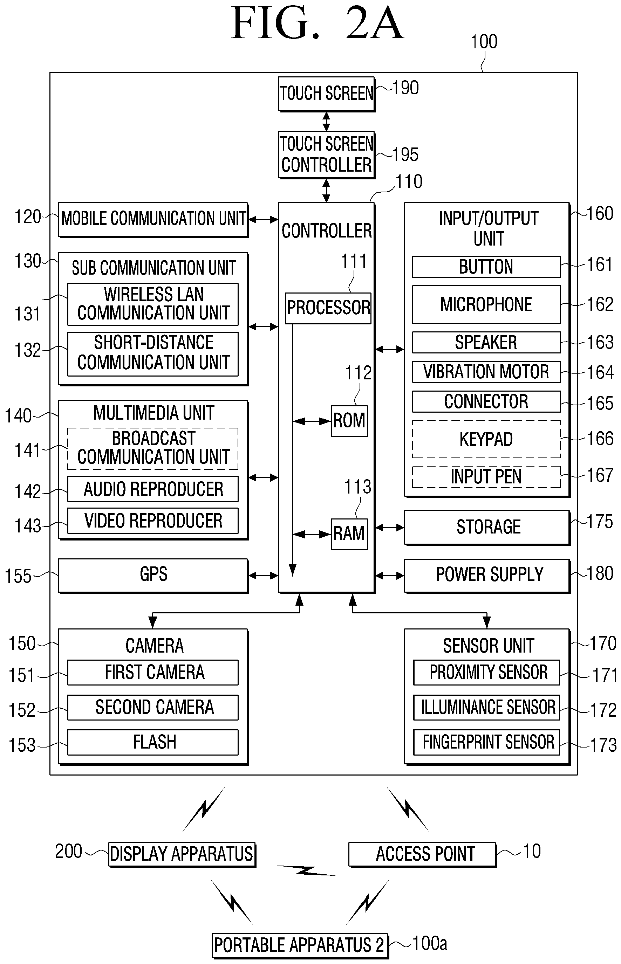

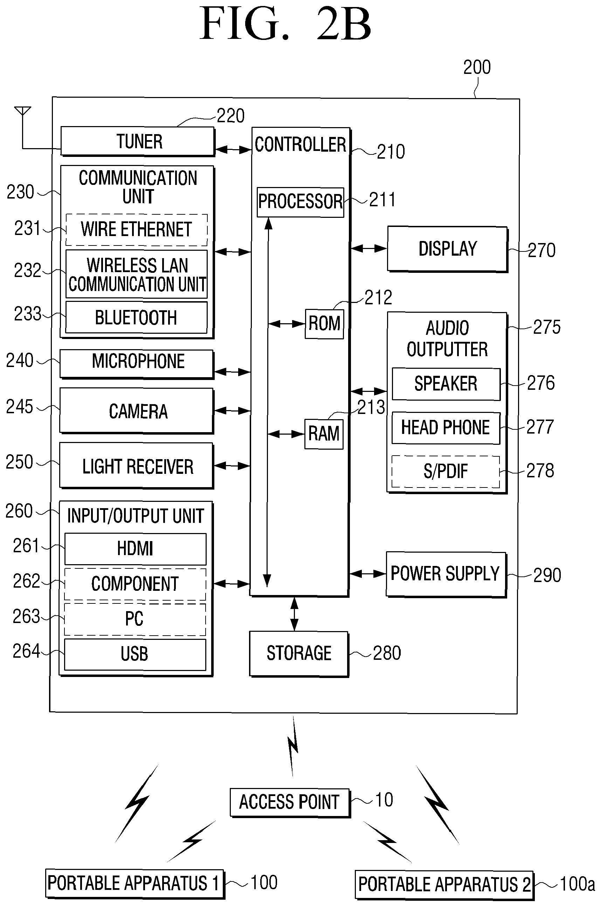

FIGs. 2A and 2B are schematic block diagrams showing a plurality of portable apparatuses and a display apparatus according to an exemplary embodiment.

Referring to FIGs. 2A and 2B, the portable apparatus 100 may be connected with the display apparatus 200 through a wire or wirelessly using a mobile communication unit 120 (e.g., mobile communicator), a sub communication unit 130 (e.g., sub communicator), and a connector 165. The portable apparatus 100 may be implemented by using a mobile phone, a smart phone, a camera, an MP3 player, a video player, a tablet PC, a wearable device, an electronic board, a home appliance (for example, a refrigerator, an air conditioner, a dishwasher, a clothes washer/dryer, an HVAC system, or other devices), or a display apparatus.

The portable apparatus 100 may be an apparatus which is provided with a touch screen and transmits data (or content) to the display apparatus 200 through the communication unit 120 or 130 or receives data from the display apparatus 200. The portable apparatus 100 may be an apparatus which is provided with an input pen and a touch screen, and transmits data (or content) to the display apparatus 200 through the communication unit 120 or 130 or receives data (or content) from the display apparatus 200.

The portable apparatus 100 may be an apparatus which transmits data (or content) to the display apparatus 200 or receives data (or content) from the display apparatus 200 using an interaction such as, for example, a touch, a touch gesture (for example, flick, swipe, drag, or approaching gesture, etc.) inputted through a touch screen 190.

The portable apparatus 100 may refer to an apparatus which is provided with a display (for example, a display including only a display panel without a touch panel), and transmits or receives data (or content) to or from the display apparatus 200 through the communication unit 120 or 130. The portable apparatus 100 may include one or two or more touch screens. In addition, the portable apparatus 100 may include a plurality of screens divided on a single touch screen.

The portable apparatus 100 includes a controller 110, a mobile communication unit 120 (e.g., mobile communicator), a sub communication unit 130 (e.g., sub communicator), a multimedia unit 140 (e.g., multimedia device), a camera 150, a Global Positioning System (GPS) 155, an input/output unit 160, a sensor unit 170, a storage 175, and a power supply 180. In addition, the portable apparatus 100 includes a touch screen 190 and a touch screen controller 195.

The controller 110 may include a processor 111, a Read Only Memory (ROM) 112 which stores a control program for controlling the portable apparatus 100, and a Random Access Memory (RAM) 113 which stores signals or data inputted from the outside of the portable apparatus 100 or is used as a storage area for various jobs performed in the portable apparatus 100. The processor 111, the ROM 112, and the RAM 113 may be implemented by using a semiconductor chip.

The controller 110 controls the overall operations of the portable apparatus 100 and a signal flow between the inner elements 120-195 of the portable apparatus 100, and processes data. The controller 110 controls power supply to the inner elements 120-195 using the power supply 180. In addition, in response to a user input or a predetermined condition being satisfied, the controller 110 may execute a sensor of the sensor unit 170, an OS stored in the storage 175, or an application.

The processor 111 may include a Graphic Processing Unit (GPU) for processing graphics. The processor 111 may be implemented in the form of a System On Chip (SoC) including a core and a GPU. The processor 111 may include a single core, a dual core, a triple core, a quad core, or a core of a multiple thereof. In addition, the processor 111, the ROM 112, and the RAM 113 may be connected with one another via a bus.

The controller 110 may control the mobile communication unit 120, the sub communication unit 130, the multimedia unit 140, the camera 150, the GPS 155, the input/output unit 160, the sensor unit 170, the storage 175, the power supply 180, the touch screen 190, and the touch screen controller 195.

According to an exemplary embodiment, the controller 110 may control the touch screen to display a photo, a first communication unit to receive identification information of the display apparatus wirelessly, and a second communication unit to transmit the photo, and may control the portable apparatus 100 to transmit the photo to the display apparatus 200 which transmits the identification information of the display apparatus 200 through the second communication unit in response to a first touch which is detected from a first icon displayed on the touch screen.

The controller 110 may control to display a list of display apparatuses including the display apparatus 200 which transmits the identification information of the display apparatus 200 in response to receiving the identification information of the display apparatus 200.

The controller 110 may control to provide feedback corresponding to the transmission of the first photo, and the feedback may include at least one of visual feedback, auditory feedback, and haptic feedback.

The controller 110 may request a list of thumbnail images regarding a photo displayed on the display apparatus 200 through the second communication unit in response to a second touch which is detected from a second icon displayed on the touch screen 190.

The controller 110 may control to request reproduction of a photo displayed on the display apparatus 200 through the second communication unit in response to a third touch which is detected from a third icon displayed on the touch screen.

The term "controller 110" used in the exemplary embodiments may include the processor 111, the ROM 112, and the RAM 113.

The mobile communication unit 120 may be connected with an external device through a mobile communication network using one or two or more antennas under the control of the controller 110. The mobile communication unit 120 may transceive radio signals for a voice call, a video call, a text message (SMS), a multimedia message 9MMS), and data communication with a mobile phone having a contact phone number, a smart phone, a tablet PC, or other portable devices.

The sub communication unit 130 may be connected with an external device under the control of the controller 110. The sub communication unit 130 may transmit access point connection information to the display apparatus 200 under the control of the controller 110.

The sub communication unit 130 may include one of a wireless LAN communication unit 131 (e.g., wireless LAN communicator) and a short-distance communication unit 132 (e.g., short-distance communicator) or both the wireless LAN communication unit 131 and the short-distance communication unit 132.

The wireless LAN communication unit 131 may be wirelessly connected with the access point 10 in a place where the access point 10 is installed under the control of the controller 110. The wireless LAN communication unit 131 supports the wireless LAN standards (IEEE802.11x) of the IEEE. The short-distance communication unit 132 may perform short-distance communication between the portable apparatus 100 and the display apparatus 200 wirelessly without the access point 10 under the control of the controller 110.

The short-distance communication unit 132 may include Bluetooth, Bluetooth low energy, IrDA, UWB, MST, NFC, etc. The communication unit of the portable apparatus 100 may support Digital Living Network Alliance (DLNA) based on Universal Plug-and-Play (UPnP) technology.

The term "communication unit" (or "communicator") used in the exemplary embodiments includes the mobile communication unit 120 and the sub communication unit 130. According to an exemplary embodiment, the communication unit for receiving the identification information of the display apparatus 200 may be referred to as a first communication unit or first communicator (for example, Bluetooth communication or Bluetooth low energy). In addition, the communication unit for transmitting photos to the display apparatus 200 may be referred to as a second communication unit or second communicator (for example, a wireless LAN).

The multimedia unit 140 may include a broadcast receiver 141, an audio reproducer 142, or a video reproducer 143. The broadcast receiver 141 may receive broadcast signals (for example, TV broadcast signals, radio broadcast signals, or data broadcast signals) and additional broadcasting information (for example, an Electronic Program Guide (EPG) or an Electronic Service Guide (ESG)) transmitted from external broadcasting stations through an antenna under the control of the controller 110. In addition, the controller 110 may reproduce the received broadcast signals and additional broadcasting information using a touch screen, a video codec, and an audio codec.

The audio reproducer 142 may reproduce an audio source (for example, an audio file including a file extension of mp3, wma, ogg, or wav) which is pre-stored in the storage 175 of the portable apparatus 100 or received from the outside using an audio codec under the control of the controller 110.

According to an exemplary embodiment, the audio reproducer 142 may reproduce auditory feedback (for example, an output of an audio source stored in the storage 175) corresponding to a response to transmission of a photo to the display apparatus 200 using an audio codec.

According to an exemplary embodiment, the audio reproducer 142 may reproduce auditory feedback (for example, an output of an audio source stored in the storage) corresponding to a touch or a continuous movement of a touch detected on the touch screen 190 through an audio codec under the control of the controller 110.

The video reproducer 143 may reproduce a digital video source (for example, a video file including a file extension of mpeg, mpg, mp4, avi, mov, mkv, etc.) which is pre-stored in the storage 175 of the portable apparatus 100 or received from the outside using a video codec under the control of the controller 110. A multimedia application which may be installed in the portable apparatus 100 may reproduce an audio source or a video source using an audio codec and/or a video codec. In addition, the multimedia application installed in the portable apparatus 100 may reproduce a video source using a hardware codec and/or a software codec.

According to an exemplary embodiment, the video reproducer 143 may reproduce visual feedback (for example, an output of a video source stored in the storage) in response to transmission of a photo to the display apparatus 200 using a video codec under the control of the controller 110.

The multimedia unit 140 may include the audio reproducer 142 and the video reproducer 143 without the broadcast receiver 141 according to the performance, structure, or other design needs of the portable apparatus 100. In addition, the controller 110 may include the audio reproducer 142 or the video reproducer 143 of the multimedia unit 140.

The term "audio codec" used in the exemplary embodiments may include one or two or more audio codecs. The term "video codec" used in the exemplary embodiments may include one or two or more video codecs.

The camera 150 may include at least one of a first front camera 151 and a second rear camera 152 for photographing a still image or a moving image under the control of the controller 110. For example, the camera 150 may include one or both of the first camera 151 and the second camera 152. In addition, the first camera 151 or the second camera 152 may include an auxiliary light source (for example, a flash 153) to provide an amount of light necessary or desired for photographing.

The GPS 155 may periodically receive signals (for example, orbit information of a GPS satellite, time information of a satellite, a navigation message, etc.) from a plurality of GPS satellites on the earth's orbit.

The portable apparatus 100 may calculate the locations of the plurality of GPS satellites and the portable apparatus 100 using signals received from the plurality of GPS satellites, and may calculate a distance using a time difference in the transmission and the reception. The portable apparatus 100 may calculate the location, time, or moving speed of the portable apparatus 100 through triangulation. An additional GPS satellite may be needed for correcting the orbit or time.

In an indoor space, the portable apparatus 100 may detect the location or moving speed of the portable apparatus 100 using the access point 10. The location of the portable apparatus 100 in the indoor space may be detected in a cell-ID method which uses an ID of the access point 10, an enhanced cell-ID method using the ID of the access point 10 and Received Signal Strength (RSS), or an Angle of Arrival (AoA) method which uses an angle of a signal transmitted from the access point 10 and received at the portable apparatus 100. It is understood that other methods may also be used to detect the moving speed of the portable apparatus 100 as well. In addition, the portable apparatus 100 may detect the location or moving speed of the portable apparatus 100 located in the indoor space using a radio beacon. It will be understood by a person skilled in the art that the location of the portable apparatus 100 in the indoor space may be detected in various methods in addition to the above-described methods.

The input/output unit 160 may include at least one of one or two or more buttons 161, a microphone 162, a speaker 163, a vibration motor 164, a connector 165, a keypad 166, and an input pen 167.

Referring to FIG. 1, the button 161 may include a home button provided on a lower portion of a front surface, a previous execution app button, and a back button. The button 161 may include a power/lock button provided on a lateral surface and at least one volume button. In addition, the button 161 of the portable apparatus 100 may include only the home button, the power/lock button, and the volume button. The button 161 of the portable apparatus 100 may be implemented as a touch button on a bezel provided outside the touch screen 190 as well as a physical button. In addition, the button 161 of the portable apparatus 100 may be displayed on the touch screen 190 in the form of a text, an image, or an icon.

The microphone 162 generates an electric signal based on a voice or a sound received from the outside under the control of the controller 110. The electric signal generated in the microphone 162 is converted in the audio codec and stored in the storage 175 or outputted through the speaker 163. One or two or more microphones 162 may be provided on the front surface, lateral surface, and rear surface of the portable apparatus 100. In addition, the one or two or more microphones 162 may be located only on the lateral surface of the portable apparatus 100, or only on one other surface (e.g., rear surface) of the portable apparatus 100.

One or a plurality of speakers 163 may be located on the front surface, the lateral surface, and the rear surface of the portable apparatus 100. Referring to FIGs. 1 and 2, the plurality of speakers may be located on the portable apparatus 100. The speakers may be located on the front surface and the rear surface of the portable apparatus 100. One speaker may be located on the front surface of the portable apparatus 100 and the plurality of speakers may be located on the rear surface of the portable apparatus 100. In addition, the plurality of speakers may be located on the lateral surface. The portable apparatus 100 having an additional speaker provided on the lateral surface thereof may provide a different sound effect to the user in comparison with a different portable apparatus having speakers located on the front surface and the rear surface thereof.

According to an exemplary embodiment, the speaker 163 may output auditory feedback in response to transmission of a photo to the display apparatus 200 under the control of the controller 110.

The vibration motor 164 may convert an electric signal into a mechanical vibration under the control of the controller 110. The vibration motor 164 may include a linear vibration motor, a bar type vibration motor, a coin type vibration motor, or a piezoelectric element vibration motor. For example, in response to a voice call request being received from another portable apparatus, the vibration motor 164 of the portable apparatus 100 in a vibration mode may be operated under the control of the controller 110. One or two or more vibration motors 164 may be located in the portable apparatus 100. In addition, the vibration motor 164 may vibrate the entire portable apparatus 100 or may vibrate a part of the portable apparatus 100.

According to an exemplary embodiment, the vibration motor 164 may output haptic feedback in response to transmission of a photo to the display apparatus 200 under the control of the controller 110.

The connector 165 may be used as an interface for connecting the portable apparatus 100 to an external device or a power source. The portable apparatus 100 may transmit data stored in the storage 175 or receive data from the outside through a cable connected with the connector 165 under the control of the controller 110. The portable apparatus 100 may receive power from the power source or charge a battery through the cable connected with the connector 165. In addition, the portable apparatus 100 may be connected with an external accessory (for example, a speaker or a keyboard dock) through the connector 165.

The keypad 166 may receive a key input of the user. The keypad 166 may include a physical keypad formed on the front surface of the portable apparatus 100, a virtual keypad displayed on the touch screen 190, or a physical keypad connected with the portable apparatus 100 wirelessly or through a wire. Additionally, the keypad may include a combination of the physical keypad, the virtual keypad, and the physical keypad.

The input pen 167 may be used by the user to touch an object (for example, a menu, a text, an image, a video, a figure, an icon, and a shortcut icon) or content displayed (or configured) on a home screen 191 of the touch screen 190 of the portable apparatus 100 or a screen (for example, a memo screen, a note pad screen, a calendar screen, etc.) displayed on a write/draw application of the portable apparatus 100.

The input pen 167 may be used by the user to touch the touch screen using a capacitive, resistive, or electromagnetic resonance (EMR) fashion or input a text using the displayed virtual keypad.

The input pen 167 may include a stylus pen or a haptic pen having a vibration element (for example, an actuator or a vibration motor) embedded therein to vibrate. In addition, the input pen 167 may operate (for example, vibrate) the vibration element in response to sensing information detected by a sensor (for example, an acceleration sensor) embedded in the input pen 167 as well as control information received from the portable apparatus 100.

It will be understood by a person skilled in the art that the shape (for example, a circular cross section or polygonal cross section) and/or structure (for example, a structure including a battery, a housing, and a nib) of the input pen 167 corresponding to an insertion hole of the portable apparatus 100 may vary according to the performance or structure of the portable apparatus 100.

The sensor unit 170 includes at least one sensor to detect the state of the portable apparatus 100. For example, the sensor unit 170 may include a proximity sensor 171 to detect whether the user approaches the portable apparatus 100 or not, an illuminance sensor 172 to detect an amount of ambient light of the portable apparatus 100, and a fingerprint sensor 173 to detect a user's fingerprints. In addition, the sensor unit 170 may include an acceleration sensor to detect acceleration along 3 axes (x-axis, y-axis, z-axis) applied to the portable apparatus 100, a gravity sensor to detect a working direction of gravity, or an altimeter to detect an altitude by measuring atmospheric pressure.

The sensor unit 170 may measure the motion acceleration and the gravity acceleration of the portable apparatus 100. In addition, the sensor unit 170 may further include a heartbeat sensor to detect a user's heart beat.

The at least one sensor included in the sensor unit 170 may detect the state of the portable apparatus 100, and may generate an electric signal corresponding to the detection and transmit the electric signal to the controller 110. It will be understood by a person skilled in the art that the sensor included in the sensor unit 170 may be added or deleted according to the performance of the portable apparatus 100.

The storage 175 may store signals or data which is inputted or outputted in response to the operations of the mobile communication unit 120, the sub communication unit 130, the multimedia unit 140, the camera 150, the GPS 155, the input/output unit 160, the sensor unit 170, and the touch screen 190 under the control of the controller 110. The storage 175 may store a Graphical User Interface (GUI) related to a control program for controlling the portable apparatus 100 or the controller 110 and an application provided by a manufacturer or downloaded from the outside, images for providing the GUI, user information, documents, databases, or related data.

The storage 175 may store at least one initial setting screen (for example, a GUI) corresponding to initial settings. The initial setting screen may be formed of a plurality of pages.

According to an exemplary embodiment, the storage 175 may store portable apparatus information, advertising packets received through the first communication unit, display apparatus information included in the advertising packets, and access point device information of the access point connected through the second communication unit.

The storage 175 may store photo transmission information corresponding to a photo transmitted to the display apparatus 200.

The storage 175 may store a list of thumbnail images received from the display apparatus 200.

The storage 175 may store a first touch location to a fourth touch location corresponding to a first touch to a fourth touch, a 21^{st} touch location corresponding to a 21^{st} touch, a 31^{st} touch location corresponding to a 31^{st} touch, or first touch location information to fourth touch location information, 21^{st} touch location information, or 31^{st} touch location information. It is understood that the storage 175 may also store many other types of touch locations corresponding to any touch number or range of touch numbers.

The storage 175 may store visual feedback (for example, a video, etc.) which is outputted from the touch screen 190 in response to transmission of a photo and is recognizable by the user, auditory feedback (for example, a sound, etc.) which is outputted from the speaker 163 and is recognizable by the user, and haptic feedback (for example, a haptic pattern, etc.) which is outputted from the vibration motor 164 and is recognizable by the user.

The storage 175 may store a feedback providing time (for example, 300 ms) of the feedback provided to the user.

The term "storage" used in the exemplary embodiments includes the storage 175, the ROM 112 and the RAM 113 in the controller 110, or a memory card mounted in the portable apparatus 100 (for example, a micro SD card, a memory stick). The storage may include a non-volatile memory, a volatile memory, a hard disk drive (HDD), or a solid state drive (SSD).

The power supply 180 may supply power to the elements 120-195 located in the portable apparatus 100 under the control of the controller 110. The power supply 180 may supply the portable apparatus 100 with power which is inputted from an external power source through a cable connected with the connector 165 under the control of the controller 110. In addition, the power supply 180 may supply power to one or two or more batteries under the control of the controller 110 to charge the batteries. One or two or more batteries may be located between the touch screen 190 located on the front surface and the rear surface.

The power supply 180 may charge one or two or more batteries wirelessly (for example, a magnetic resonance method, a microwave method, or a magnetic induction method) under the control of the controller 110.

The touch screen 190 includes a touch panel to receive a touch input and a display panel to display a screen. The touch screen 190 may provide GUIs corresponding to various services (for example, a voice call, a video call, data transmission, data reception, photographing, viewing a video, or executing an application) to the user. The touch screen 190 may transmit an analog signal corresponding to a single touch or a multi-touch inputted through the home screen or the GUI to the touch screen controller 195. The touch screen 190 may receive an input of a single touch or a multi-touch through a user's body (for example, fingers of a user) or the input pen 167.

The display panel includes a plurality of pixels and displays an image through the plurality of pixels. For example, the display panel may include a Liquid Crystal Display (LCD), an OLED, an LED, etc. The display panel may display various operation states of the portable apparatus 100, and various images and a plurality of objects generated by executing an application or a service.

According to an exemplary embodiment, the touch is not limited to contact of a user's body or the input pen 167 with the touch screen 190, and the touch may also include a contactless operation. For example, the contactless operation may include hovering an object (e.g., user's body part or the input pen 167) above the touch screen 190 such that the object has a gap of 50 mm or less between the touch screen 190 and the object. It will be understood by a person skilled in the art that a contactless gap detectable on the touch screen 190 varies according to the performance or structure of the portable apparatus 100.

For example, the touch screen 190 may be configured to use a resistive method, a capacitive method, an infrared method, or an acoustic wave method. In addition, the touch screen 190 may include an electromagnetic resonance (EMR) method. The touch screen 190 adopting the EMR method may further include a separate touch panel of the EMR method to receive an input of an input pen which has a resonant circuit to generate a resonance in a loop coil of the EMR method.

According to an exemplary embodiment, the touch screen 190 may display visual feedback in response to a response corresponding to a connection with the access point 10 under the control of the controller 110.

The touch screen controller 195 converts an analogue signal corresponding to the single touch or multi-touch received from the touch screen 190 into a digital signal, and transmits the digital signal to the controller 110. The controller 110 may calculate X and Y coordinates corresponding to the touch location on the touch screen 190 using the digital signal received from the touch screen controller 195.

The controller 110 may control the touch screen 190 using the digital signal received from the touch screen controller 195. For example, the controller 110 may distinguish a shortcut icon displayed on the touch screen 190 from the other shortcut icons in response to an inputted touch, or may execute an application corresponding to a selected shortcut icon and display an application screen on the touch screen 190.

The touch screen controller 195 may be implemented as one or a plurality of touch screen controllers 195. The touch screen controller 195 may be included in the controller 110 according to the performance or structure of the portable apparatus 100.

The touch screen controller 195 may convert an analog signal corresponding to a touch received from a touch screen of the EMR method, separately from the analog signal corresponding to the single touch or multi-touch received from the touch screen 190, into a digital signal, and may transmit the digital signal to the controller 110. The controller 110 may calculate X and Y coordinates corresponding to the touch location on the touch screen of the EMR method using the digital signal received from the touch screen controller 195. In addition, the touch screen of the EMR method may use a touch screen controller of the EMR method.

The portable apparatus 100 may include a plurality of touch screens as well as a single touch screen. The touch screens may be provided in housings. The housings may be connected with one another by a fastening device, such as a hinge, screws, or other fasteners. In addition, a plurality of flexible touch screens may be provided in a single housing. The plurality of flexible touch screens may include a single display panel and a plurality of touch panels. The plurality of flexible touch screens may include a single touch panel corresponding to a plurality of display panels. In addition, the plurality of flexible touch screens may include a plurality of touch panels corresponding to the plurality of display panels.

The portable apparatus according to an exemplary embodiment may include one of the first portable apparatus 100 and the second portable apparatus 100a. The above-described plurality of portable apparatuses 100, 100a are merely one exemplary embodiment, and are not limited thereto. In addition, in FIG. 1, the portable apparatus may further include a third portable apparatus, as well as a fourth and additional portable apparatuses.

It will be understood by a person skilled in the art that at least one element may be added to or deleted from the elements of the portable apparatus 100 shown in FIGs. 2A and 2B according to the performance or design needs of the portable apparatus 100.

Referring to FIGs. 2A and 2B, the display apparatus 200 may be connected with the access point 10 or the portable apparatus 100, 100a wirelessly through a communication unit 230. The display apparatus 200 may output audio received from the access point 10 or the portable apparatus 100, 100a. The display apparatus 200 may output audio streaming received from the access point 10 or the portable apparatus 100, 100a connected therewith wirelessly.

The display apparatus 200 may be connected with the external portable apparatus 100 wirelessly or through a wire using the communication unit 230 or an input/output unit 260. The external portable apparatus 100 may include a mobile phone, a smart phone, a tablet PC, and a server.

The display apparatus 200 may include a display 270 and further include one of a tuner 220, the communication unit 230, and the input/output unit 260. The display apparatus 200 may include the display 270 and further include a combination of the tuner 220, the communication unit 230, and the input/output unit 260. In addition, the display apparatus 200 having the display 270 may be electrically connected with an external device including a tuner.

The display apparatus 200 includes the tuner 220, the communication unit 230 (e.g., communicator), a microphone 240, a camera 245, a light receiver 250, the input/output unit 260, the display 270, an audio outputter 275, a storage 280, and a power supply 290. The display apparatus 200 may include a sensor (for example, an illuminance sensor, a temperature sensor, etc.) to detect the internal or external state of the display apparatus 200. The display apparatus 200 capable of receiving broadcast signals as shown in FIG. 2B may include the tuner 220. The display apparatus 200 without a broadcast signal receiving function may not include the tuner 220.

A controller 210 may include a processor 211, a ROM 212 (or any other type of non-volatile memory) in which control programs for controlling the display apparatus 200 are stored, and a RAM 213 (or any other type of volatile memory) which stores signals or data inputted from the outside of the display apparatus 200 or is used as a storage area corresponding to various jobs performed in the display apparatus 200.

The controller 210 controls the overall operations of the display apparatus 200 and a signal flow between the inner elements 220-290 of the display apparatus 200, and processes data. The controller 210 controls power supplied to the inner elements 220-280 from the power supply 290. In addition, in response to a user input being received or a predetermined condition being satisfied, the controller 210 may execute an OS and various applications which are stored in the storage 280.

The processor 211 may include a GPU for processing graphics corresponding to an image or a video. The processor 211 may be implemented by using a SoC including a core and a GPU. The processor 211 may include a single core, a dual core, a triple core, a quad core, and a core of a multiple thereof.

The processor 211 may include a plurality of processors, for example, a main processor, a sub processor which is operated in a sleep mode, and a sensor processor to control a sensor. In addition, the processor 211, the ROM 212, and the RAM 213 may be connected with one another through an internal bus.

The controller 210 may control the display 270 to display a photo, a first communication unit to transmit the identification information of the display apparatus wirelessly, and a second communication unit to receive the photo, and may control the display 270 to display a first photo received from a first portable apparatus through the second communication unit on the display 270, control the display 270 to display an 11^{th} photo received from a second portable apparatus through the second communication unit after receiving the first photo on the display 270, and control the display 270 to display the first photo and the 11^{th} photo in different sizes. Throughout the detailed description, numerical identifiers may be provided to distinguish between certain features, such as photographs or icons. For example, the photo received from the first portable apparatus may exemplarily be referred to as a "first photo", and a photo received from a second portable apparatus may exemplarily be referred to as an "11^{th} photo". These numerical identifiers are not intended to limit any aspect of the exemplary embodiments to the particular numerical identifiers. For example, the photo received from the second portable apparatus is not limited to being an "11^{th} photo", and may instead be a 1^{st} photo, a 2^{nd} photo, a 20^{th} photo, etc., according to some predetermined order. The various numerical identifiers are simply being used, in an exemplary fashion only, to clearly distinguish between various features (e.g., photographs), for the convenience of explanation.

The controller 210 may control the display 270 to overlap a reduced image of the first photo with a part of the 11^{th} photo.

In response to a second photo being received from the first portable apparatus through the second communication unit, the controller 210 may control the display 270 to display the received second photo on the display 270 and control to overlap the reduced image of the first photo and a reduced image of the 11^{th} photo with a part of the second photo.

In response to the first photo being received through the second communication unit, the controller 210 may control the display 270 to display identification information of the first portable apparatus which has transmitted the first photo on the display 270 with the first photo.

The controller 210 may control the display 270 to display the identification information of the first portable apparatus which has transmitted the first photo on the reduced image of the first photo.

The controller 210 may control the reduced image of the first photo and the reduced image of the 11^{th} photo to be located on the display 270 according to a predetermined order.

The controller 210 may control the display 270 to display the identification information of the first portable apparatus which has transmitted the first photo with the reduced image of the first photo on a part of the display 270, and control the display 270 to display the identification information of the second portable apparatus which has transmitted the 11^{th} photo with the reduced image of the 11^{th} photo.

In response to a request for a list of thumbnail images corresponding to the first photo and the 11^{th} photo being received from the first portable apparatus through the second communication unit, the controller 210 may control to transmit the list of thumbnail images corresponding to the first photo and the 11^{th} photo to the first portable apparatus through the second communication unit.

In response to a request for downloading of the first photo and the 11^{th} photo being received from the first portable apparatus through the second communication unit, the controller 210 may control to transmit the first photo and the 11^{th} photo to the first portable apparatus through the second communication unit.

In response to a request for reproduction of the first photo and the 11^{th} photo being received from the first portable apparatus through the second communication unit, the controller 210 may control to reproduce the first photo and the 11^{th} photo in the form of a slide show.

The controller 210 may control to provide feedback corresponding to the display of the first photo on the display 270, and the feedback may include at least one of visual feedback and auditory feedback.

The term "controller of the display apparatus 200" used in the exemplary embodiments may include the processor 211, the ROM 212, and the RAM 213 of the display apparatus 200, although is not limited thereto, and may omit certain of these hardware components and add other hardware components.

It will be understood by a person skilled in the art that the configuration and operation of the controller 110 may be implemented in various ways according to exemplary embodiments.

The tuner 220 may tune and select only a frequency of a channel to be received by the display apparatus 200 from among many propagation components through amplification, mixing, and resonance of broadcast signals received wirelessly or through a wire. The broadcast signals may include a video, an audio, and additional data (for example, EPG).

The tuner 220 may receive the video, audio, and data in a frequency band corresponding to a channel number (for example, cable broadcast number 228) corresponding to user input (for example, an input of control information-channel number, an input of channel up-down, etc., received from a remote control device).

The tuner 220 may receive broadcast signals from various sources such as a terrestrial broadcast, a cable broadcast, a satellite broadcast, an Internet broadcast, or a combination thereof. The tuner 220 may receive broadcast signals from a source such as an analog broadcast or a digital broadcast. The tuner 220 may be implemented in an all-in-one type with the display apparatus 200 or may be implemented as a separate device (for example, a set-top box, a tuner connected to the input/output unit 260) having a tuner unit electrically connected with the display apparatus 200.

The communication unit 230 may connect the display apparatus 200 to the portable apparatus 100 or the server under the control of the controller 210. The controller 210 may download an application from the outside or web browse through the communication unit 230. In addition, the communication unit 230 may receive control information corresponding to the control of the display apparatus 200 from the portable apparatus 100 under the control of the controller 210.

The communication unit 230 may include one of a wire Ethernet 231, a wireless LAN communication unit 232 (e.g., wireless LAN communicator), and a short-distance communication unit 233 (e.g., short-distance communicator) according to the performance and structure of the display apparatus 200. In addition, the communication unit 230 may include a combination of the Ethernet 232, the wireless LAN communication unit 232, and the short-distance communication unit 233.

According to an exemplary embodiment, the communication unit for transmitting the identification information of the display apparatus 200 to the portable apparatus may be referred to as a first communication unit or first communicator (for example, Bluetooth communication, Bluetooth low energy, etc.). In addition, the communication unit for receiving a photo from the portable apparatus may be referred to as a second communication unit or second communicator (for example, a wireless LAN, etc.).

The communication unit 230 of the display apparatus 200 is substantially similar to the communication unit of the portable apparatus 100, and thus, a redundant explanation thereof is omitted.

The microphone 240 receives a voice uttered by the user. The microphone 240 may convert the received voice into an electric signal and output the electric signal to the controller 210. For example, the user voice may include a voice corresponding to the control of a menu or a function of the display apparatus 200. A recognizable range of the microphone 240 may vary according to the level of a user's voice and a surrounding environment (for example, a speaker sound, ambient noise).

The microphone 240 may be implemented in an all-in-one type with the display apparatus 200 or may be separated therefrom. The separated microphone 240 may be electrically connected with the display apparatus 200 through the communication unit 230 or the input/output unit 260.

The camera 245 photographs an image or images (for example, continuous frames) corresponding to a user's motion including a gesture in a camera recognizable range. The user motion may include a part of the user's body such as a user's face, gaze, hand, fist, or finger, or a motion of a part of the user's body.

The camera 245 may convert the photographed image into an electric signal and output the electric signal to the controller 210 under the control of the controller 210. The controller 210 may analyze the photographed image and recognize the user's motion. The controller 210 may display a menu on the display apparatus 200 using the result of recognizing the motion and control according to the result of recognizing the motion (for example, controlling a channel or a volume, etc.).

When a plurality of cameras 245 are provided, the display apparatus 200 may receive a 3D still image or 3D motion using a first camera provided on the front surface of the display apparatus 200 and an adjacent second camera. The first camera and the second camera may be separated by a predetermined distance or within a predetermined range. For example, a distance between the first camera and the separate second camera is larger than 10 mm and less than 80 mm).

The camera 245 may be implemented in an all-in-one type as part of the display apparatus 200 or may be separated therefrom. An electronic device including a separated camera may be electrically connected with the display apparatus 200 through the communication unit 230 or the input/output unit 260.

The light receiver 250 receives an optical signal (including control information) outputted from a remote control device through a light window.

The light receiver 250 may receive an optical signal corresponding to a user input (for example, a touch, a pressing motion, a touch gesture, a voice, or another type of motion) from the remote control device. The control information may be extracted from the received optical signal. The extracted control information may be transmitted to the controller 210.

The input/output unit 260 receives content from the outside of the display apparatus 200 under the control of the controller 210. For example, the content may include a video, an image, a text, or a web document. In addition, the content may include a video including an advertisement, an image including an advertisement, or a web document including an advertisement. The input/output unit 260 may include one of a High-Definition Multimedia Interface (HDMI) input port 261, a component input jack 262, a PC input port 263, and a USB input jack 264. The input/output unit 260 may include a combination of the HDMI input port 262, the component input jack 262, the PC input port 263, and the USB input jack 264.

The display 270 displays a video included in the broadcast signal received through the tuner 220 under the control of the controller 210. The display 270 may display a video (for example, a moving image) inputted through the communication unit 230 or the input/output unit 260. The display 270 may output a video stored in the storage 280 under the control of the controller 210. In addition, the display 270 may display a voice UI to perform a voice recognition task corresponding to voice recognition, or a motion UI to perform a motion recognition task corresponding to motion recognition. For example, the voice UI may include a voice command guide and the motion UI may include a motion command guide.

According to an exemplary embodiment, the screen of the display apparatus 200 may include the display 270 of the display apparatus 200.

According to an exemplary embodiment, the display 270 may output visual feedback corresponding to a change to a broadcast channel corresponding to display of a photo received from the portable apparatus 100, 100a under the control of the controller 210.

According to another exemplary embodiment, the display 270 may be separated from the display apparatus 200. The display 270 may be electrically connected with the display apparatus 200 through the input/output unit 260 of the display apparatus 200. The controller 210 may output the video received from the tuner 220, the video stored in the storage 280, the voice UI, or the motion UI to the display 270 through the input/output unit 260.

The audio outputter 275 may output audio included in the broadcast signal received through the tuner 220 under the control of the controller 210. The audio outputter 275 may output audio (for example, audio corresponding to a voice, a sound, or music) inputted through the communication unit 230 or the input/output unit 260. In addition, the audio outputter 275 may output an audio file stored in the storage 280 under the control of the controller 210.

The audio outputter 275 may include one of a speaker 276, a headphone output terminal 277 (e.g., head phone), or a Sony/Philips Digital Interface Format (S/PDIF) output terminal 278. In addition, the audio outputter 275 may include a combination of the speaker 276, the headphone output terminal 277, and the S/PDIF output terminal 278.

According to an exemplary embodiment, the audio outputter 275 may output auditory feedback corresponding to a change to a broadcast channel corresponding to display of a photo received from the portable apparatus 100, 100a under the control of the controller 210 of the display apparatus 200.

The storage 280 may store various data, programs or applications for driving and controlling the display apparatus 200 under the control of the controller 210. The storage 280 may store signals or data inputted or outputted in response to the driving of the tuner 220, the communication unit 230, the microphone 240, the camera 245, the light receiver 250, the input/output unit 260, the display 270, the audio outputter 275, and the power supply 290.

The storage 280 may store a control program for controlling the display apparatus 200 and the controller 210, an application initially provided by a manufacturer or downloaded from the outside by a user (e.g., downloaded over the Internet), a GUI related to the application, an object for providing the GUI (for example, an image text, an icon, a button, etc.), user information, documents, databases, or related data.

The storage 280 may include a broadcast reception module, a channel control module, a volume control module, a communication control module, a voice recognition module, a motion recognition module, a light reception module, a display control module, an audio control module, an external input control module, a power control module, a voice database (DB), or a motion DB (not shown). The modules and the databases of the storage may be implemented in the form of software to perform a broadcast reception control function, a channel control function, a volume control function, a communication control function, a voice recognition function, a motion recognition function, a light reception control function, a display control function, an audio control function, an external input control function, or a power control function in the display apparatus 200. The controller 210 may perform the functions of the display apparatus 200 using the software stored in the storage 280.

The storage 280 may store an advertising packet transmitted through the first communication unit.

The storage 280 may store resolution information of the display, information of the display apparatus, identification information of the portable apparatus, information of the portable apparatus, or information of the access point.

The storage 280 may store size information of a reduced image (for example, horizontal pixels X vertical pixels).

The storage 280 may store photos received from the portable apparatuses.

The storage 280 may store metadata of the photos received from the portable apparatuses. For example, the metadata may contain photographing information such as a photographing time, a photographing date, a photographing place, and subject identification information such as identification information of a person, an animal, a type of food, an automobile, a landmark, etc.

The storage 280 may store a request for a list of thumbnail images which is received from the portable apparatus.

The storage 280 may store a moving image, an image, or a text corresponding to visual feedback.

The storage 280 may store a sound corresponding to auditory feedback.

The storage 280 may store a feedback providing time (for example, 300 ms) of feedback provided to the user.

The term "storage" used in the exemplary embodiments may be used as a term including the storage 280, a storage which is implemented by using the ROM 112, the RAM 113, and an SoC of the controller 210, a memory card (for example, a micro SD card, a USB memory) mounted in the display apparatus 200, and an external storage (for example, a USB memory) connectable to the USB port 264 of the input/output unit 260. In addition, the storage may include a non-volatile memory, a volatile memory, a hard disk drive (HDD), or a solid state drive (SDD), or a combination of any of these different types of memories.

The power supply 290 supplies power inputted from an external power source to the inner elements 210-280 of the display apparatus 200 under the control of the controller 210. In addition, the power supply 290 may supply power inputted from one or two or more batteries located in the display apparatus 200 to the inner elements 220-280 under the control of the controller 210.

At least one element may be added to or deleted from the elements (for example, the elements 220-290) of the display apparatus 200 shown in FIGs. 1, 2A and 2B according to the performance of the display apparatus 200. In addition, it will be understood by a person skilled in the art that the locations of the elements (for example, the elements 220-290) may be changed according to the performance, structure or design needs of the display apparatus 200.

As described above, the portable apparatus may provide various contents to the display apparatus. The various contents may include photos. Hereinafter, a method for transmitting and displaying a photo will be explained in detail.

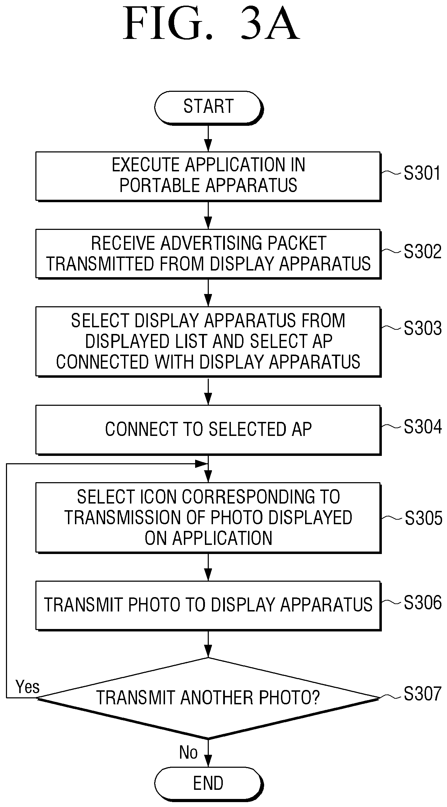

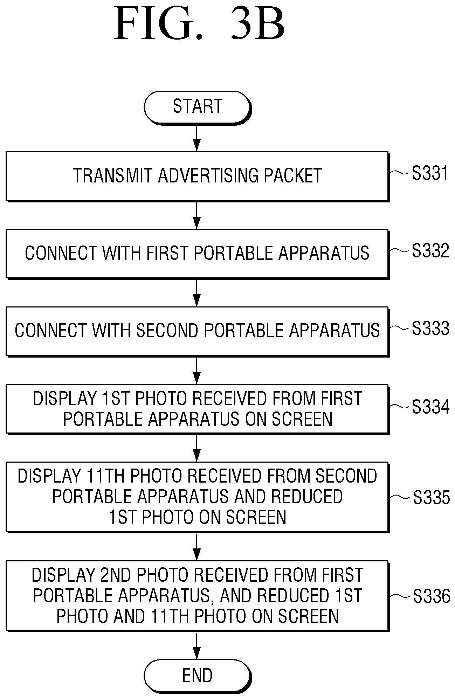

FIGs. 3A and 3B are schematic flowcharts illustrating a method for displaying a photo of the plurality of portable apparatuses and the display apparatus according to an exemplary embodiment.

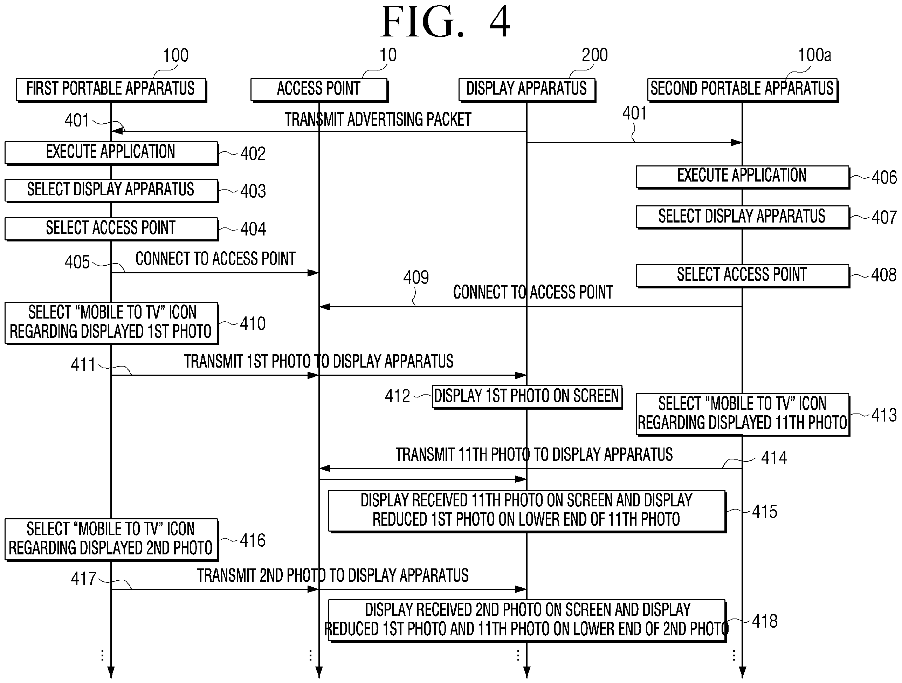

FIG. 4 is a schematic sequence diagram showing the method for displaying a photo of the plurality of portable apparatuses and the display apparatus according to an exemplary embodiment.

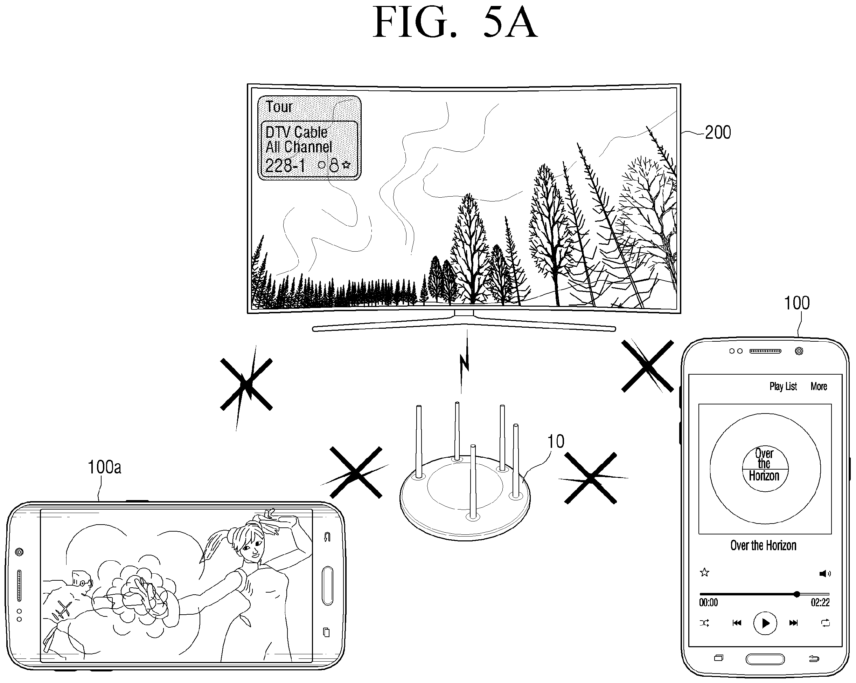

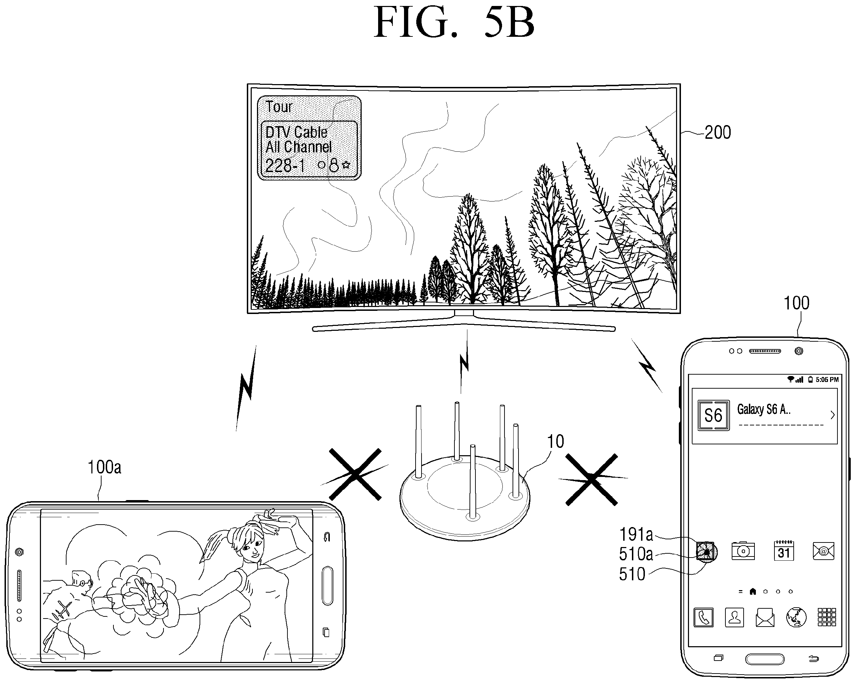

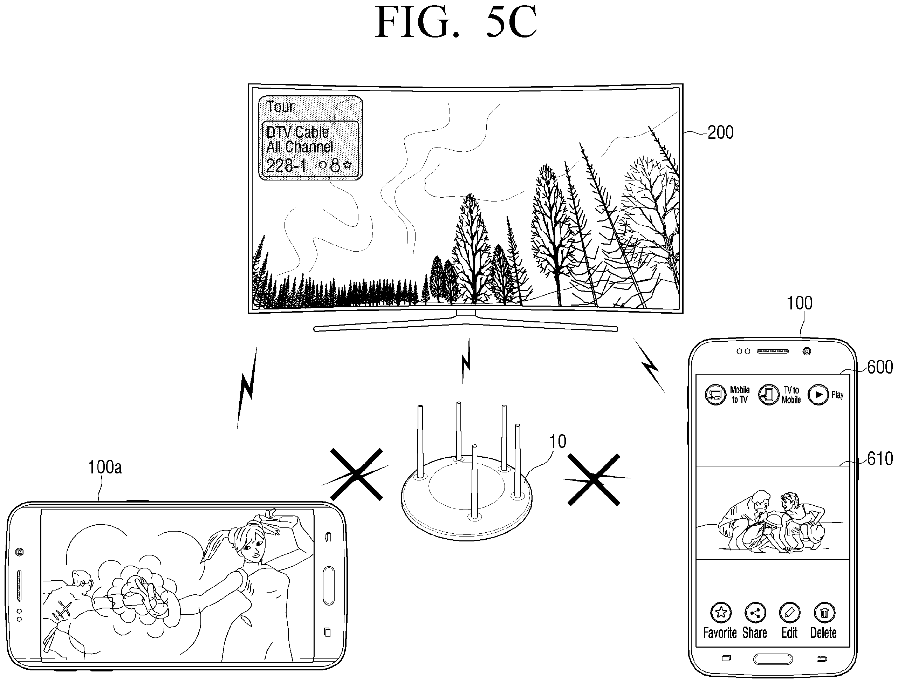

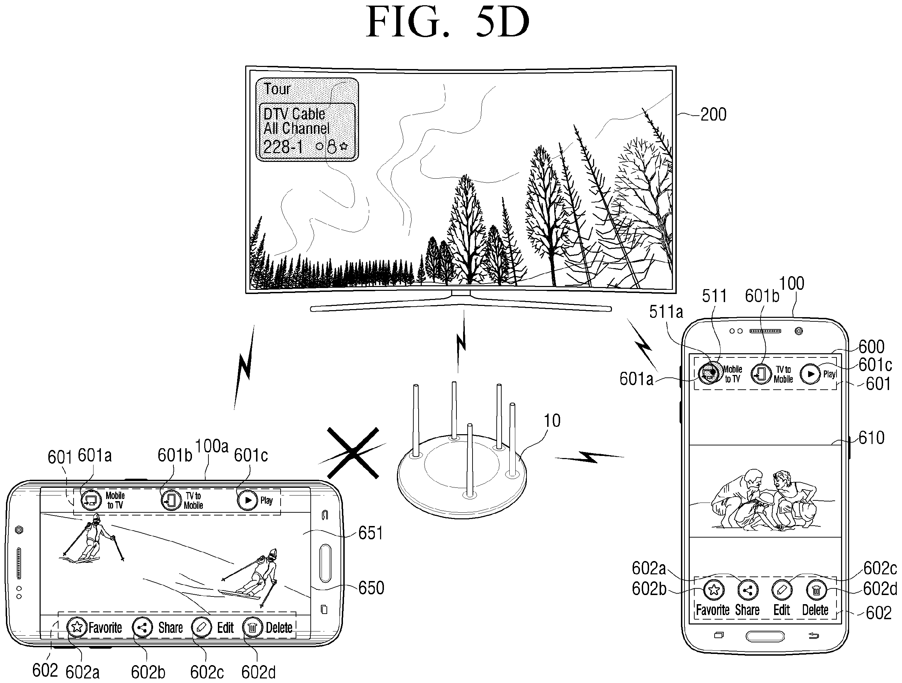

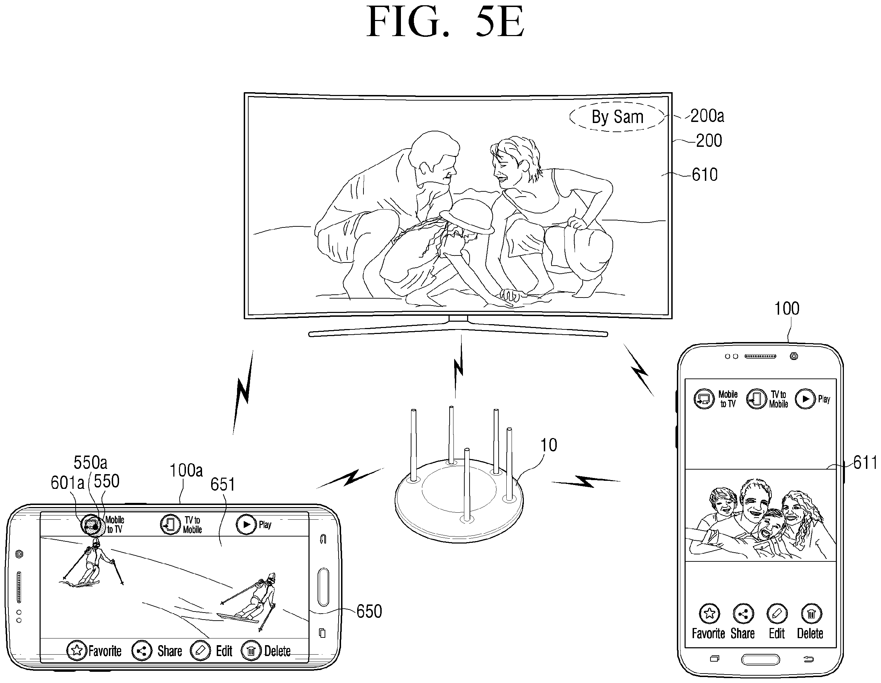

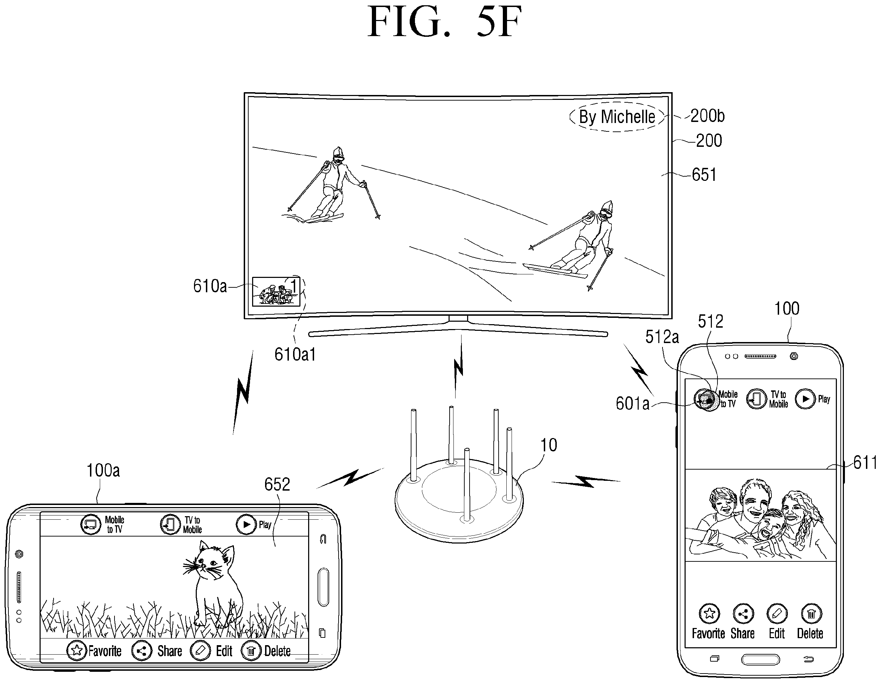

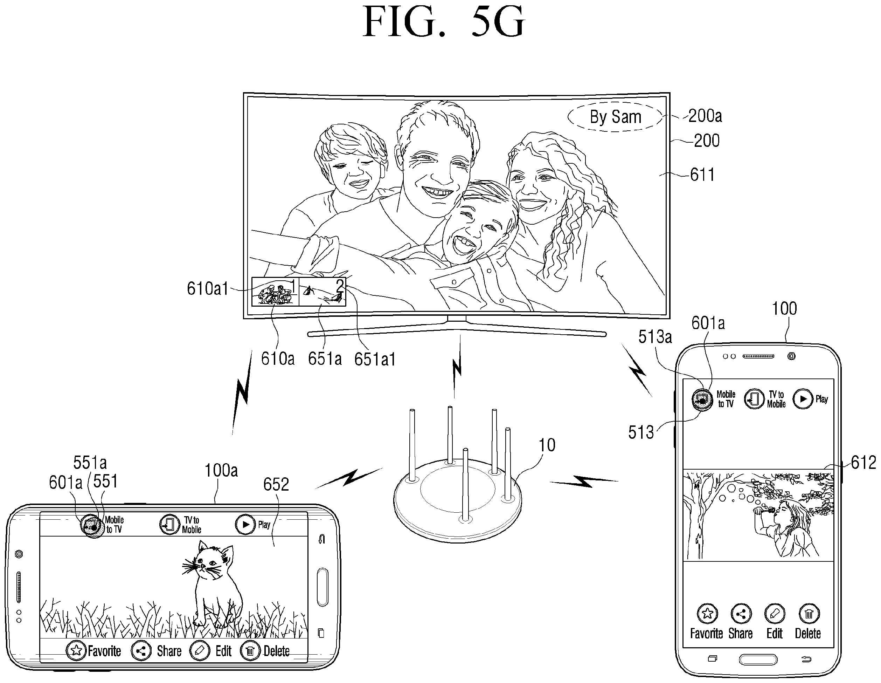

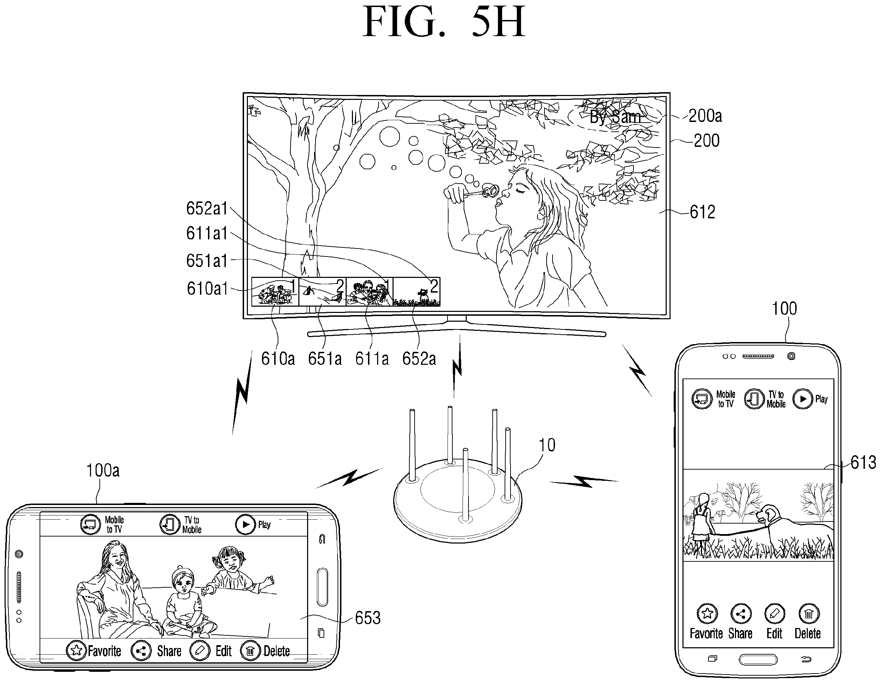

FIGs. 5A, 5B, 5C, 5D, 5E, 5F, 5G and 5H are views showing an example of the method for displaying a photo of the plurality of portable apparatuses and the display apparatus according to an exemplary embodiment.

In operation S301 of FIG. 3A, an application is executed in the first portable apparatus.

In operation S331 of FIG. 3B, an advertising packet is transmitted from the display apparatus and received by the portable apparatus.

Referring to FIGs. 3A, 4 and 5A, the display apparatus 200 which is connected with the access point (AP) 10 by a second communication method (for example, uPNP, DLNA, WiFi, etc.) periodically transmits an advertising packet to the outside using a first communication method (for example, Bluetooth low energy, Bluetooth, etc.) (for example, at intervals of 20 ms to 1024 s, which is changeable) in operation 401. The display apparatus may be connected with a predetermined AP (for example, a previously connected AP, etc.) or the display apparatus 200 and the portable apparatuses may be connected with each other without an AP (for example, WiFi Direct).

The advertising packet transmitted to the outside from the display apparatus 200 in the first communication method may include display apparatus information (for example, an SSID which is identification information, a MAC address, an IP address, a model name, a manufacturer, a state, capability, a version, a service list, etc.) and/or information of the access point connected by the second communication method (for example, an SSID, a MAC address, an IP address, etc.).

The advertising packet transmitted from the display apparatus 200 to the outside is merely an aspect of an exemplary embodiment and the exemplary embodiments are not limited thereto. Any advertising packet that includes a part or the entirety of the display apparatus information including the identification information of the display apparatus 200 may be transmitted. In response to a part or the entirety of the display apparatus information being received at the external portable apparatus in the first communication method, the portable apparatus may analyze the part or the entirety of the display apparatus information and may be connected with the display apparatus in the second communication method.

In response to the display apparatus 200 being powered off (for example, in response to power being connected to a socket), the controller 210 may periodically transmit the advertising packet to the outside using the communication unit 230. In response to the display apparatus 200 being powered off (for example, in response to a power cable being connected to the socket), the display apparatus may be powered on by a control signal of the portable apparatus regarding a pre-registered display apparatus (having a record of having been previously connected) in a wake-on-LAN (WOL) method, and may display a photo.

Referring to FIGs. 3A, 4 and 5B, an application for controlling transmission of a photo from the portable apparatus 100 to the display apparatus 200 is executed in the portable apparatus 100 in operation 402.

Referring to FIG. 5B, the user makes a first touch 510 on a shortcut icon 191a corresponding to an application to be executed on the home screen of the first portable apparatus 100. The controller 110 may detect the first touch 510 using the touch screen 190 and the touch screen controller 195. The controller 110 may calculate a first touch location 510a (for example, X1 coordinate and Y1 coordinate) corresponding to the first touch 510 using an electric signal received from the touch screen controller 195.

The controller 110 may store first touch location information corresponding to the first touch location 510a in the storage 175. The stored first touch location information may include a touch identifier (ID) for managing a history, a touch location, a touch detecting time, or touch information (for example, a touch pressure, a touch direction, a touch holding time, etc.).

Referring to FIG. 5C, the controller 110 may execute the application (for example, a gallery application) corresponding to the first touch 510 in the first portable apparatus 100. The controller 110 may display an application screen 600 corresponding to the first touch 510 on the touch screen 190 of the portable apparatus 100. A pre-stored first photo 610 may be displayed on the application screen 600. In addition, a first screen (for example, one or two or more folders in which photos are stored, and/or a thumbnail image of one or two or more photos) may be displayed on the application screen 600.

In addition, the controller 110 may execute a dedicated application (for example, a mobile smart view application) corresponding to the first touch 510. The dedicated application may be downloaded from the outside (e.g., over the Internet) and installed.

An icon 601 may be displayed on the upper end of the application screen 600. The icon 601 displayed on the upper end may include "Mobile to TV" 601a to transmit the photo displayed on the application screen 600 to the display apparatus 200. The icon 601 displayed on the upper end may include "TV to Mobile" 601b to receive a photo at the first portable apparatus 100 from the display apparatus 200.

The icon 601 displayed on the upper end may include "Play" 601c to reproduce one or a plurality of photos (for example, a slide show, etc.) in the display apparatus 200. It will be understood by a person skilled in the art that the number of icons 601 displayed on the upper end may change and a function performed by the icons 601 may be added or changed according to various considerations.

An icon may be displayed on the lower end of the application screen 600. The icon 602 displayed on the lower end may include one of "favorite" 602a, "share" 602b, "edit" 602c, and "delete" 602d. In addition, the icon 602 displayed on the lower end may include a combination of the favorite 602a, the share 602b, the edit 602c, and the delete 602d. It will be understood by a person skilled in the art that the number of icons 602 displayed on the lower end may change and a function performed by the icons 602 may be added or changed.

In operation S302 of FIG. 3A, the advertising packet periodically transmitted from the display apparatus is received.

The controller 110 may analyze the advertising packet received by the first communication method (for example, Bluetooth low energy, Bluetooth), and display a display apparatus list including the identification information (for example, an SSID, a MAC address, an IP address, or a model name) of the display apparatus 200 which has transmitted the advertising packet on the screen.

The controller 110 may analyze the received advertising packet and display the display apparatus list including an icon of the display apparatus 200 which has transmitted the advertising packet on the screen.

The identification information of the display apparatus 200 included in the display apparatus list may be many different types of identification information, for example, "[TV]JS9500F," "[TV]UN820S1," or "[TV]JU7000F." In addition, the display apparatus list may be displayed on the application screen in the form of a pop-up window. The list may have transparency (or may be otherwise changeable or flexible in terms of display characteristics).

In operation S303 of FIG. 3A, a display apparatus and an access point connected with the display apparatus are selected from the displayed display apparatus list.

The user may select a display apparatus (for example, "[TV]JS9500F" 200) that a photo is transmitted to from the displayed display apparatus list in operation 403).

The user may select the access point 10 connected with the display apparatus 200 in operation 404. In response to selecting the display apparatus 200 to which a photo is to be transmitted, the controller 110 may display a list of access points connected with the display apparatus 200 on the screen. One or a plurality of access points may be displayed on the list of access points.

The user may select the access point 10 connected with the selected display apparatus 200 to which the photo is to be transmitted to from the access point list. In addition, the controller 110 may analyze the received advertising packet and select the access point 10 connected with the display apparatus 200 without requiring any user input.

In operation S304 of FIG. 3A, the first portable apparatus 100 connects to the selected access point.

In operation S332 of FIG. 3B, the access point connects to the first portable apparatus 100.

Referring to FIG. 4, the first portable apparatus 100 is connected to the access point 10 by the first communication method, which is different from the second communication method, in operation 405.

In response to the access point 10 being selected from the displayed access point list, the controller 110 may be connected with the access point 10 through the communication unit. The communication method (for example, Bluetooth, Bluetooth low energy, etc.) for connecting the first portable apparatus 100 and the display apparatus 200 may be different from the communication method (for example, WiFi, uPNP, DLNA, etc.) for connecting the first portable apparatus 100 and the access point 10.

In addition, the communication method for connecting the first portable apparatus 100 to the display apparatus 200 (for example, to search for a display apparatus using the first communication method) may be different from the communication method for connecting the first portable apparatus 100 to the access point 10 (for example, to transmit a photo to the selected display apparatus using the second communication method).

The user may input a password to connect to the access point 10. The user may input various passwords through the portable apparatus 100 according to a secure authentication method of the access point 10 (for example, WPA, WPA2, TKIP, AES, etc.)

The controller 110 may store access point connection information corresponding to the connected access point 10 in the storage 175.

For example, the access point connection information may include an access point name (SSID), a MAC address, or a security method utilized by the access point 10 (for example, based on WPA2). In addition, the access point connection information may include a password inputted by the user.

It will be understood by a person skilled in the art that an item included in the access point connection information may be added, deleted, or changed according to a connection method between the portable apparatus 100 and the access point 10.

In response to the access point connection information being stored, the controller 110 may terminate the connection or maintain the connection by the first communication method.

Referring to FIGs. 3A to 5D, an application for controlling transmission of a photo from the second portable apparatus 100a to the display apparatus 200 is executed in the second portable apparatus 100a in operation 406.

The user makes an 11^{th} touch on a shortcut icon corresponding to the application to be executed on the home screen of the second portable apparatus 100a. The controller 110 of the second portable apparatus 100a may detect the 11^{th} touch using the touch screen 190 and the touch screen controller 195. The controller 110 of the second portable apparatus 100a may calculate an 11^{th} touch location (for example, X11 coordinate and Y11 coordinate) corresponding to the 11^{th} touch using an electric signal received from the touch screen controller 195.

The controller 110 of the second portable apparatus 100a may store 11^{th} touch location information corresponding to the 11^{th} touch location in the storage 175. The stored 11^{th} touch location information may include a touch identifier (ID) for managing history, a touch location, a touch detecting time, or touch information (for example, a touch pressure, a touch direction, a touch holding time, etc.).

Referring to FIG. 5D, the controller 110 of the second portable apparatus 100a may execute the application (for example, a gallery application) corresponding to the 11^{th} touch in the second portable apparatus 100a. The controller 110 may display an application screen 650 corresponding to the 11^{th} touch on the touch screen 190 of the portable apparatus 100. A pre-stored 11^{th} photo 660 may be displayed on the application screen 650. In addition, a first screen may be displayed on the application screen 650. The first screen may display various types of information, for example, one or two or more folders in which photos are stored, and/or a thumbnail image of one or two or more photos.

An icon 601 may be displayed on the upper end of the application screen 650 of the second portable apparatus 100a. The icon 601 displayed on the upper end of the application screen 650 of the second portable apparatus 100a may be substantially similar to the icon 601 displayed on the upper end of the application screen 600 of the first portable apparatus 100, and thus a redundant explanation thereof is omitted.

An icon 602 may be displayed on the lower end of the application screen 650 of the second portable apparatus 100a. The icon 602 displayed on the lower end of the application screen 650 of the second portable apparatus 100a may be substantially similar to the icon 602 displayed on the lower end of the application screen 600 of the first portable apparatus 100, and thus a redundant explanation thereof is omitted.

In operation S302 of FIG. 3A, the advertising packet periodically transmitted from the display apparatus is received.

The controller 110 of the second portable apparatus 100a may analyze the received advertising packet, and display a display apparatus list including the identification information (for example, an SSID, a model name, etc.) of the display apparatus 200 which has transmitted the advertising packet on the screen. The controller 110 of the second portable apparatus 100a may analyze the received advertising packet and display the display apparatus list including an icon of the display apparatus 200 which has transmitted the advertising packet on the screen.

The identification information of the display apparatus 200 included in the display apparatus list may be various types of information, for example, "[TV]JS9500F," "[TV]UN820S1," or "[TV]JU7000F." In addition, the display apparatus list may be displayed on the application screen 600 in the form of a pop-up window. The list may have transparency (which is a changeable feature, e.g., the list may also be, for example, opaque).

In operation S303 of FIG. 3A, a display apparatus and an access point connected with the display apparatus are selected from the displayed display apparatus list.

The user may select a display apparatus (for example, "[TV]JS9500F" 200) that a photo is to be transmitted to from the displayed display apparatus list in operation 407.

The user may select the access point 10 connected to the display apparatus 200 in operation 408. In response to selecting the display apparatus 200 that a photo is to be transmitted to, the controller 110 may display a list of access points connected with the display apparatus 200 on the screen. One or a plurality of access points may be displayed on the list of access points.

The user may select the access point 10 connected to the display apparatus 200 that the photo is to be transmitted to from the access point list. In addition, the controller 110 may analyze the received advertising packet and select the access point 10 connected to the display apparatus 200 without requiring a user input (e.g., automatically).

In operation S304 of FIG. 3A, the second portable apparatus 100a connects to the selected access point 10.

In operation S333 of FIG. 3B, the access point 10 connects to the second portable apparatus 100a.

Referring to FIG. 4, the second portable apparatus 100a connects to the access point 10 by the second communication method, which is different from the first communication method, in operation 409.

In response to the access point 10 being selected from the displayed access point list, the controller 110 may connect to the access point 10 through the communication unit.

The connection between the second portable apparatus 100a and the access point may be substantially similar to the connection between the first portable apparatus 100 and the access point, and thus a redundant explanation thereof is omitted.

In response to access point connection information being stored, the controller 110 of the second portable apparatus 100a may terminate the connection or maintain the connection by the first communication method.

In operation 305 of FIG. 3A, an icon corresponding to transmission of a photo displayed on the application is selected.

Referring to FIG. 5D, the user makes a second touch 511 on 601a of the icons 601a displayed on the upper end of the application screen 600 in operation 410. The controller 110 may detect the second touch 511 using the touch screen 190 and the touch screen controller 195. The controller 110 may calculate a second touch location 511a (for example, X2 coordinate and Y2 coordinate) corresponding to the second touch 511 using an electric signal received from the touch screen controller 195.

The controller 110 may store second touch location information corresponding to the second touch location 511a in the storage 175. The stored second touch location information may include a touch identifier (ID) for managing history, a touch location, a touch detecting time, or touch information (for example, a touch pressure, a touch direction, a touch holding time, etc.).

In operation S306 of FIG. 3A, a photo is transmitted to the display apparatus.

Referring to FIG. 5E, the controller 110 of the first portable apparatus 100 may transmit the first photo 610 to the display apparatus 200 in response to the second touch 511 in operation 411.

The controller 110 of the first portable apparatus 100 may transmit the first photo 610 to the display apparatus 200 through the communication unit in response to the second touch 511. The controller 110 may store first photo transmission information corresponding to the first photo transmitted to the display apparatus 200 in the storage 175. The stored first photo transmission information may include a photo identifier (ID), a transmission starting time, a transmission finishing time, or transmission target information (for example, the identification information of the display apparatus 200, a MAC address, an IP address, etc.).

The controller 110 of the first portable apparatus 100 may provide feedback corresponding to the transmission of the first photo 610 to the display apparatus 200.

The feedback may include at least one of visual feedback, auditory feedback, and haptic feedback.

The visual feedback may include a visual effect (for example, an animation effect such as displaying a separate image or a fade effect applied to the separate image) corresponding to the transmission of the first photo 610. The controller 110 may display the visual feedback on the touch screen 190.

The auditory feedback may include a sound corresponding to the transmission of the first photo 610. The controller 110 may output the auditory feedback through the speaker 163. The controller 110 may output the auditory feedback through a single speaker or a plurality of speakers.

The haptic feedback may include a vibration corresponding to the transmission of the first photo 610. The controller 110 may output the haptic feedback through the vibration motor 164. When a plurality of vibration motors 164 are provided, the controller 110 may selectively output the haptic feedback through one of the plurality of vibration motors.

In operation S334 of FIG. 3B, the first photo received from the first portable apparatus is displayed on the screen.

Referring to FIG. 4 and 5E, the controller 210 of the display apparatus 200 may receive the first photo 610 transmitted from the first portable apparatus 100 through the communication unit. The storage 280 may store the received first photo 610 under the control of the controller 210 of the display apparatus 200.

The controller 210 of the display apparatus 200 may display the received first photo 610 on the screen in operation 412. The controller 210 of the display apparatus 200 may display the received first photo 610 according to a resolution (for example, 3840 pixels X 2160 pixels) of the screen. In addition, the controller 210 of the display apparatus 200 may display the identification information identifying the first portable apparatus 100 (for example, the user name of a user/owner of the first portable apparatus 200a) which has transmitted the first photo 610 on the screen.

The identification information of the first portable apparatus 100 may include a phone number, a model name, a time at which the first portable apparatus 100 transmits the photo, or an order at which the first portable apparatus 100 transmits the photo to the display apparatus 200 relative to other portable apparatuses. The controller 210 of the display apparatus 200 may display the identification information 200a of the first portable apparatus 100 which has transmitted the first photo 610 during a set time (for example, 500 ms, which may be variable). In addition, in response to photos being received continuously from the first portable apparatus 100, the controller 210 of the display apparatus 200 may display the identification information 200a of the first portable apparatus 100 during the set time.

The controller 210 of the display apparatus 200 may provide feedback corresponding to the display of the first photo 610 to the user. The feedback provided by the display apparatus 200 may be provided to the user as at least one of visual feedback and auditory feedback. The controller 210 may provide one of the visual feedback, the auditory feedback, or a combination of the visual feedback and the auditory feedback to the user through the display apparatus 200.

The visual feedback may be displayed to distinguish a visual effect (for example, an animation effect such as a separate image or fade applied to the separate image) corresponding to the display of the first photo 610 from other objects (for example, a pop-up window) displayed on the screen. The auditory feedback may be outputted through a head phone 277 as a sound (for example, a temporary sound effect during the display of the screen or background music continuously reproduced during the display of the screen) corresponding to the display of the first photo 610.

Referring to FIG. 5E, the user makes a 12^{th} touch 550 on one of the icons 601a displayed on the upper end of the application screen 650 in operation 413.

The controller 110 may detect the 12^{th} touch 550 using the touch screen 190 and the touch screen controller 195. The controller 110 may calculate a 12^{th} touch location 550a (for example, X12 coordinate and Y12 coordinate) corresponding to the 12^{th} touch 550 using an electric signal received from the touch screen controller 195.

The controller 110 may store 12^{th} touch location information corresponding to the 12^{th} touch location 550a in the storage 175. The stored 12^{th} touch location information may include a touch identifier (ID) for managing history, a touch location, a touch detecting time, or touch information (for example, a touch pressure, a touch direction, a touch holding time, etc.).

Referring to FIG. 5F, the controller 110 of the second portable apparatus 100a may transmit the 11^{th} photo 651 to the display apparatus 200 in response to the 12^{th} touch 550 in operation 414.

The controller 110 of the second portable apparatus 100a may transmit the 11^{th} photo 651 to the display apparatus 200 through the communication unit in response to the 12^{th} touch 550. The controller 110 may store 11^{th} photo transmission information corresponding to the 11^{th} photo transmitted to the display apparatus 200 in the storage 175. The stored 11^{th} photo transmission information may include a photo identifier (ID), a transmission starting time, a transmission finishing time, or transmission target information (for example, the identification information of the display apparatus 200, a MAC address, an IP address, etc.).

In operation S335 of FIG. 3B, the 11^{th} photo received from the second portable apparatus is displayed on the screen.

Referring to FIG. 4 and 5F, the controller 210 of the display apparatus 200 may receive the 11^{th} photo 651 transmitted from the second portable apparatus 100a through the communication unit. The storage 280 may store the received 11^{th} photo 651 under the control of the controller 210 of the display apparatus 200.

The controller 210 of the display apparatus 200 may display the received 11^{th} photo 651 on the screen in operation 415. The controller 210 of the display apparatus 200 may display the received 11^{th} photo 651 according to a resolution (for example, 3840 pixels X 2160 pixels) of the screen. In addition, the controller 210 of the display apparatus 200 may display the identification information of the second portable apparatus 100a (for example, the user name of the second portable apparatus 200b) which has transmitted the 11^{th} photo 610 on the screen. The identification information of the second portable apparatus 100a may include a phone number or a model name. The controller 210 of the display apparatus 200 may display the identification information 200b of the second portable apparatus 100a which has transmitted the 11^{th} photo 651 during a set time (for example, 500 ms, which may be variable).

In response to photos being received continuously from the second portable apparatus 100a, the controller 210 of the display apparatus 200 may display the identification information 200b of the second portable apparatus 100 during the set time. In response to a photo being received from another portable apparatus, the controller 210 of the display apparatus 200 may display identification information of another portable apparatus during the set time.

The controller 210 of the display apparatus 200 may display the received 11^{th} photo 651 on the screen, and may reduce the pre-displayed first photo 610 (for example, to a size of 10% (or some other percentage) of the first photo, 610a) and display the reduced first photo 610 with the 11^{th} photo 651. The controller 210 of the display apparatus 200 may display the received 11^{th} photo 651 on the screen, and reduce the pre-displayed first photo 610 (for example, to a size of 10% of the first photo, 610a) and overlap the reduced first photo 610 with the lower end of the 11^{th} photo 651.

The controller 210 of the display apparatus 200 may display the received 11^{th} photo 651 on the screen, reduce the pre-displayed first photo 610 (for example, to a size of 10% of the first photo, 610a), set transparency (for example, 70% (or some other percentage)), and overlap the reduced first photo with the lower end of the 11^{th} photo 651.

In addition, the controller 210 of the display apparatus 200 may display the received 11^{th} photo 651 on the screen, and display the identification information 610a1 of the first portable apparatus 100 (for example, portable apparatus sequence number "1") which has transmitted the first photo 610 on the reduced first photo 610a. The identification information of the first portable apparatus 100 may include a phone number, a model name, or an order in which the photo is received at the display apparatus 200. In response to reduced photos corresponding to the photos continuously received from the first portable apparatus 100 being displayed, the controller 210 of the display apparatus 200 may display identification information of the first portable apparatus 100 on the reduced photos.

In response to the reduced photo corresponding to the photo received from the first portable apparatus 100 being continuously displayed, the controller 210 of the display apparatus 200 may display the identification information of the first portable apparatus 100 on the reduced photo. In addition, in response to the first portable apparatus 100 and the display apparatus 200 being disconnected from each other, the controller 210 of the display apparatus 200 may continue displaying the identification information of the first portable apparatus 100 on the reduced photo.

The controller 210 may display the reduced first photo 610a on one side (for example, the upper end, lower end, left or right) of the set screen.

The controller 210 of the display apparatus 200 may provide feedback corresponding to the display of the 11^{th} photo 651 to the user. The feedback provided by the display apparatus 200 may be provided to the user as at least one of visual feedback and auditory feedback.

The visual feedback and/or the auditory feedback corresponding to the display of the 11^{th} photo 651 may be different from the visual feedback and/or the auditory feedback corresponding to the display of the first photo 610.

The feedback corresponding to the display of the 11^{th} photo 651 is substantially similar to the feedback corresponding to the display of the first photo 610 , and thus a redundant explanation is omitted. Of course, it is understood that the feedback corresponding to the display of the 11^{th} photo 651 may have differences with the feedback corresponding to the display of the first photo 610, such as a difference in the visual effect, or a difference in the sound effect.

In operation S307 of FIG. 3A, it is determined whether another photo is transmitted or not.

Referring to FIG. 5F, the first photo 610 displayed on the application screen 600 of the first portable apparatus 100 may be changed to a second photo 611 by a user's input (for example, a touch or a touch gesture).

The controller 110 of the first portable apparatus 100 may change the first photo 610 to the second photo 611 in advance prior to determining whether to transmit another photo.

In operation S307 of FIG. 3A, in response to the first photo 610 being changed to the second photo 611, operation S305 of FIG. 3A may be resumed.

In response to the first photo 610 being continuously displayed on the application screen 600 of the first portable apparatus 100, the controller 110 of the first portable apparatus 100 may wait for a user's input during a set time (for example, 3 minutes, which may be changed to another time period).

In operation S307 of FIG. 3A, in response to a user input not being received during the set time, the photo displaying method of the display apparatus 200 finishes. In addition, in operation S307 of FIG. 3A, in response to a user input not being received during the set time, the photo displaying method of the display apparatus 200 may display a pop-up window to determine whether to reproduce a thumbnail of photos transmitted up to now or a slide show.

In response to the user selecting reproduction of the thumbnail or the slide show with the portable apparatus 100, the display apparatus 200 may change the screen to a screen corresponding to the user's selection. In response to a photo being received from the portable apparatus 100, the display apparatus 200 may change the screen to a screen for displaying the photo.

Resuming operation S305 of FIG. 3A, an icon corresponding to transmission of a photo displayed on the application is selected.

Referring to FIG. 5F, the user makes a third touch 512 on one of the icons 601a displayed on the upper end of the application screen 600 in operation 416. The controller 110 may detect the third touch 512 using the touch screen 190 and the touch screen controller 195. The controller 110 may calculate a third touch location 512a (for example, X3 coordinate and Y3 coordinate) corresponding to the third touch 512 using an electric signal received from the touch screen controller 195.

The controller 110 may store third touch location information corresponding to the third touch location 512a in the storage 175. The stored third touch location information may include a touch identifier (ID) for managing history, a touch location, a touch detecting time, or touch information (for example, a touch pressure, a touch direction, a touch holding time, etc.).

Resuming operation S306 of FIG. 3A, a photo is transmitted to the display apparatus 200.

Referring to FIG. 5F, the controller 110 of the first portable apparatus 100 may transmit a second photo 611 to the display apparatus 200 in response to the third touch 512 in operation 417.

The controller 110 of the first portable apparatus 100 may transmit the second photo 611 to the display apparatus 200 through the communication unit in response to the third touch 512. The controller 110 may store second photo transmission information corresponding to the second photo transmitted to the display apparatus 200 in the storage 175. The stored second photo transmission information may include a photo identifier (ID), a transmission starting time, a transmission finishing time, or transmission target information (for example, the identification information of the display apparatus 200, a MAC address, an IP address, etc.).

Resuming operation S336 of FIG. 3B, the second photo received from the first portable apparatus is displayed on the screen.

Referring to FIG. 4 and 5G, the controller 210 of the display apparatus 200 may receive the second photo 611 transmitted from the first portable apparatus 100 through the communication unit. The storage 280 may store the received second photo 611 under the control of the controller 210 of the display apparatus 200.

The controller 210 of the display apparatus 200 may display the received second photo 611 on the screen in operation 418. The controller 210 of the display apparatus 200 may display the received second photo 611 according to a resolution (for example, 3840 pixels X 2160 pixels) of the screen. In addition, the controller 210 of the display apparatus 200 may display the identification information 200a of the first portable apparatus 100 which has transmitted the second photo 611 on the screen.

The controller 210 of the display apparatus 200 may display the received second photo 611 on the screen, and may reduce the pre-displayed first photo 610 and 11^{th} photo 651 (for example, to a size of 10% of the first photo, or some other percentage, 610a and 651a) and display the reduced first photo 610 and 11^{th} photo 651 with the second photo 611. The controller 210 of the display apparatus 200 may display the received second photo 611 on the screen, and reduce the pre-displayed first photo 610 and 11^{th} photo 651 (for example, to a size of 10% of the first photo, or some other percentage, 610a and 651a) and overlap the reduced first photo 610 and 11^{th} photo 651 with the lower end of the second photo 611.

The controller 210 of the display apparatus 200 may display the received second photo 611 on the screen, reduce the pre-displayed first photo 610 and 11^{th} photo 651 (for example, to a size of 10% of the first photo, or some other percentage, 610a and 651a), and overlap the reduced first photo and 11^{th} photo with the lower end of the second photo 611.

The controller 210 of the display apparatus 200 may place the reduced first photo 610a and the reduced 11^{th} photo 651a which are displayed on the lower end of the screen according to a set order. For example, the set order may include a temporal order of photos received at the display apparatus 200, an order of names of portable apparatuses (for example, the first portable apparatus is displayed first and then the second portable apparatus is displayed), an album name, a type of event, or a type of photo, etc. It will be understood by a person skilled in the art that the above-described orders are merely an example and the exemplary embodiments are not limited thereto.

The controller 210 of the display apparatus 200 may display the reduced first photo 610a and the reduced 11^{th} photo 651a on one side (for example, the upper end, lower end, left or right) of the set screen.

The controller 210 of the display apparatus 200 may display the received second photo 611 on the screen, and may display the identification information 610a1 of the first portable apparatus 100 which has transmitted the first photo 610 on the reduced first photo 610 and display the identification information 651a1 of the second portable apparatus 100a which has transmitted the 11^{th} photo 651 on the reduced 11^{th} photo 651. In response to the reduced photo corresponding to the photo received from the first portable apparatus 100 being continuously displayed, the controller 210 of the display apparatus 200 may display the identification information of the first portable apparatus 100 on the reduced photo. In addition, in response to the first portable apparatus 100 and the display apparatus 200 being disconnected from each other, the controller 210 of the display apparatus 200 may continue displaying the identification information of the first portable apparatus 100 on the reduced photo.

In response to the reduced photo corresponding to the photo received from the second portable apparatus 100a being continuously displayed, the controller 210 of the display apparatus 200 may display the identification information of the second portable apparatus 100a on the reduced photo. In addition, in response to the second portable apparatus 100a and the display apparatus 200 being disconnected from each other, the controller 210 of the display apparatus 200 may continue displaying the identification information of the second portable apparatus 100a on the reduced photo.

The controller 210 may display the reduced first photo 610a and the reduced 11^{th} photo 651a in a set order and/or on one side of a set screen.

The controller 210 of the display apparatus 200 may provide feedback corresponding to the display of the second photo 611 to the user. The feedback provided by the display apparatus 200 may be provided to the user as at least one of visual feedback and auditory feedback, or a combination thereof. The controller 210 may provide one of the visual feedback and the auditory feedback or a combination of the visual feedback and the auditory feedback to the user through the display apparatus 200.

The feedback corresponding to the display of the second photo 611 is substantially similar to the feedback corresponding to the display of the first photo 610 (although differences such as for example, a difference in the visual effect or a difference in the sound, may be present), and thus a redundant explanation thereof is omitted.

Resuming operation S307 of FIG. 3A, it is determined whether another photo is transmitted or not.

Referring to FIGs. 5F and 5G, the second photo 611 displayed on the application screen 600 of the first portable apparatus 100 may be changed to a third photo 612 by a user's input (for example, a touch or a touch gesture).

The controller 110 of the first portable apparatus 100 may change the second photo 611 to the third photo 612 in advance prior to determining whether to transmit another photo.

The 11^{th} photo 651 displayed on the application screen 650 of the second portable apparatus 100a may be changed to a 12^{th} photo 652 by a user's input (for example, a touch or a touch gesture).

The controller 110 of the second portable apparatus 100a may change the 11^{th} photo 651 to the 12^{th} photo 652 in advance prior to determining whether to transmit another photo.

In operation S307 of FIG. 3A, in response to the second photo 611 being changed to the third photo 612, operation S305 of FIG. 3A resumes. In addition, in response to the 11^{th} photo 651 being changed to the 12^{th} photo 652 in operation S307 of FIG. 3A, operation S305 of FIG. 3A resumes.

In response to the second photo 611 being continuously displayed on the application screen 600 of the first portable apparatus 100, the controller 110 of the first portable apparatus 100 may wait for a user's input during a set time (for example, 3 minutes or some other time period). In addition, in response to the 11^{th} photo 651 being continuously displayed on the application screen 650 of the second portable apparatus 100a, the controller 110 of the second portable apparatus 100a may wait for a user's input during a set time (for example, 3 minutes or some other time period).

In operation S307 of FIG. 3A, in response to a user input not being received during the set time, the photo displaying method of the display apparatus 200 finishes.

Resuming operation S305 of FIG. 3A, an icon corresponding to transmission of a photo displayed on the application is selected.

Referring to FIGs. 5G and 5H, the user makes a fourth touch 513 on one of the icons 601a displayed on the upper end of the application screen 600 of the first portable apparatus 100.

The detection of the fourth touch 513 may be substantially similar to the detection of the first touch 510, and thus a redundant explanation thereof is omitted.

The user makes a 13^{th} touch 551 on one of the icons 601a displayed on the upper end of the application screen 650 of the second portable apparatus 100a.

The detection of the 13^{th} touch 551 may be substantially similar to the detection of the first touch 510, and thus a redundant explanation thereof is omitted.

Resuming operation S306 of FIG. 3A, the photo is transmitted to the display apparatus 200.

Referring to FIGs. 5G and 5H, the controller 110 of the first portable apparatus 100 may transmit the third photo 612 to the display apparatus 200 in response to the fourth touch 513.

The transmission of the third photo 612 to the display apparatus 200 and/or the storage of third photo transmission information may be substantially similar to the transmission of the second photo 611 to the display apparatus 200 and/or the storage of the second photo transmission information, and thus a redundant explanation thereof is omitted.

The controller 110 of the second portable apparatus 100a may transmit the 12^{th} photo 652 to the display apparatus 200 in response to the 13^{th} touch 551. The controller 110 of the second portable apparatus 100a may transmit the 12^{th} photo 652 to the display apparatus 200 in response to the 13^{th} touch 551 before the third photo 612 of the first portable apparatus 100 is transmitted to the display apparatus 200.

The transmission of the 12^{th} photo 652 to the display apparatus 200 and/or the storage of 12^{th} photo transmission information may be substantially similar to the transmission of the 11^{th} photo 651 to the display apparatus 200 and/or the storage of the 11^{th} photo transmission information, and thus a redundant explanation thereof is omitted.

Resuming operation S334 of FIG. 3B, the third photo received from the first portable apparatus is displayed on the screen. In addition, the 12^{th} photo received from the second portable apparatus is displayed on the screen.

Referring to FIG. 5H, the controller 210 of the display apparatus 200 may receive the third photo 612 transmitted from the first portable apparatus 100 through the communication unit. In addition, the controller 210 of the display apparatus 200 may receive the 12^{th} photo 652 transmitted from the second portable apparatus 100a through the communication unit, before receiving the third photo 612.

The storage 280 may store the received third photo 612 under the control of the controller 210 of the display apparatus 200. The storage 280 may store the 12^{th} photo 652 received earlier than the third photo 612 under the control of the controller 210 of the display apparatus 200.

The controller 210 of the display apparatus 200 may display the received third photo 612 on the screen. The controller 210 of the display apparatus 200 may display the received third photo 612 according to the resolution of the screen. In addition, the controller 210 of the display apparatus 200 may display the identification information 200a of the first portable apparatus 100 which has transmitted the third photo 612 on the screen.

The controller 210 of the display apparatus 200 may display the received third photo 612 on the screen, and reduce the pre-displayed first photo 610, 11^{th} photo 651, second photo 611, and 12^{th} photo 652 (for example, to a size of 10% (or some other percentage) of the photos 610a, 651a, 611a, 652a) and display the reduced photos with the third photo 612. The controller 210 of the display apparatus 200 may display the received third photo 612 on the screen, and reduce the pre-displayed first photo 610, 11^{th} photo 651, second photo 611, and 12^{th} photo 652 (for example, to a size of 10% (or some other percentage) of the photos 610a, 651a, 611a, 652a) and display the reduced photos on the lower end of the third photo 612.

The controller 210 of the display apparatus 200 may display the received third photo 612 on the screen, and reduce the pre-displayed first photo 610, 11^{th} photo 651, second photo 611, and 12^{th} photo 652 (for example, to a size of 10% (or some other percentage) of the photos 610a, 651a, 611a, 652a) and overlap the reduced photos with the lower end of the third photo 612.

In addition, the controller 210 of the display apparatus 200 may display the received third photo 612 on the screen, and may display the identification information 610a1 of the first portable apparatus 100 which has transmitted the first photo 610 on the reduced first photo 610, display the identification information 651a1 of the second portable apparatus 100a which has transmitted the 11^{th} photo 651 on the reduced 11^{th} photo 651, display the identification information 611a1 of the first portable apparatus 100 which has transmitted the second photo 611 on the reduced second photo 611, and display the identification information 652a1 of the second portable apparatus 100a which has transmitted the 12^{th} photo 652 on the reduced 12^{th} photo 652.

The controller 210 may display the reduced first photo 610a, 11^{th} photo 651a, second photo 611a, and 12^{th} photo 652a in a set order and/or on one side of a set screen.

The controller 210 of the display apparatus 200 may provide feedback corresponding to the display of the 11^{th} photo 651 to the user. The feedback provided by the display apparatus 200 may be provided to the user as at least one of visual feedback and auditory feedback. The controller 210 may provide one of the visual feedback and the auditory feedback or a combination of the visual feedback and the auditory feedback to the user through the display apparatus 200.

The feedback corresponding to the display of the 11^{th} photo 651 may be substantially similar to the feedback corresponding to the display of the first photo 610, and thus a redundant explanation thereof is omitted.

It will be understood by a person skilled in the art that the number of photos displayed on the screen of the display apparatus 200 as described above is merely exemplary, and the exemplary embodiments are not limited thereto.

Resuming operation S307 of FIG. 3A, it is determined whether another photo is transmitted or not.

Referring to FIG. 5G, the second photo 611 displayed on the application screen 600 of the first portable apparatus 100 may be changed to a 4^{th} photo 613 by a user's input (for example, a touch or a touch gesture).

The 12^{th} photo 652 displayed on the application screen 650 of the second portable apparatus 100a may be changed to a 13^{th} photo 653 by a user's input (for example, a touch or a touch gesture).

In operation S307 of FIG. 3A, in response to the third photo 612 being changed to the 4^{th} photo 613, operation S305 of FIG. 3A resumes. In addition, in response to the 12^{th} photo 652 being changed to the 13^{th} photo 653 in operation S307 of FIG. 3A, operation S305 of FIG. 3A resumes.

In response to the third photo 612 being continuously displayed on the application screen 600 of the first portable apparatus 100, the controller 110 of the first portable apparatus 100 may wait for a user's input during a set time (for example, 3 minutes or some other time period). In addition, in response to the 12^{th} photo 652 being continuously displayed on the application screen 650 of the second portable apparatus 100a, the controller 110 of the second portable apparatus 100a may wait for a user's input during a set time (for example, 3 minutes or some other time period).

In operation S307 of FIG. 3A, in response to a user input not being received during the set time, the photo displaying method of the display apparatus 200 finishes.

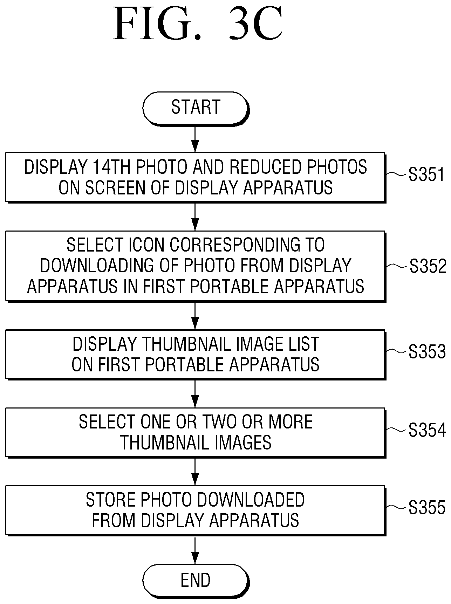

FIG. 3C is a schematic flowchart showing a method for displaying a photo of a plurality of portable apparatuses and a display apparatus according to another exemplary embodiment.

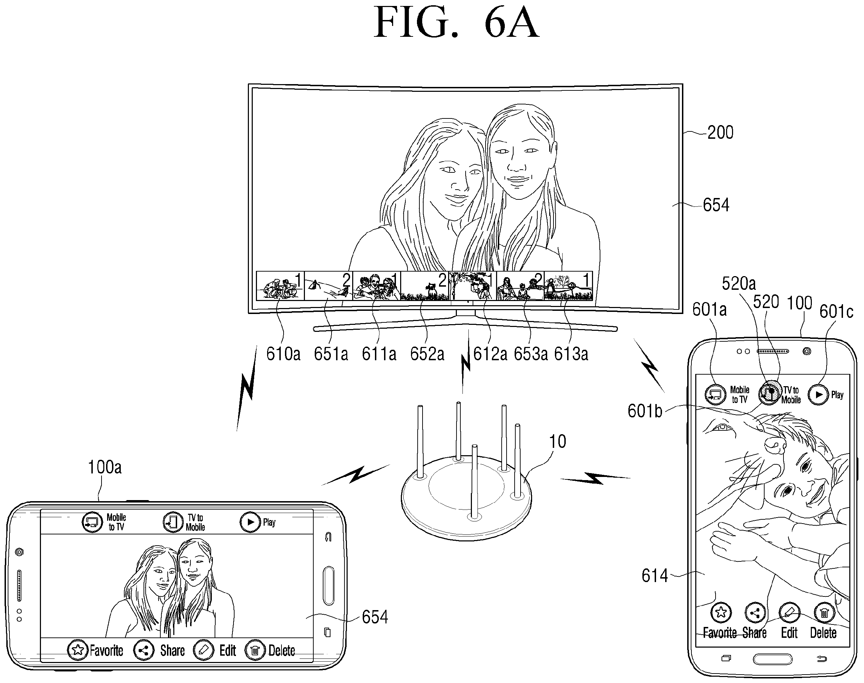

FIGs. 6A to 6C are views showing an example of the method for displaying a photo of the plurality of portable apparatuses and the display apparatus according to another exemplary embodiment.

In operation S351 of FIG. 3C, a 14^{th} screen and a reduced screen are displayed on the display apparatus.

Referring to FIG. 6A, a plurality of photos received from the first portable apparatus 100 and the second portable apparatus 100a are displayed on the screen of the display apparatus 200.

The controller 210 of the display apparatus 200 may receive the 14^{th} photo 654 from the second portable apparatus 100a through the communication unit. The storage 280 may store the received 14^{th} photo 654 under the control of the controller 210 of the display apparatus 200.

The controller 210 of the display apparatus 200 may display the received 14^{th} photo 654 on the screen, and reduce the pre-displayed first photo 610, 11^{th} photo 651, second photo 611, 12^{th} photo 652, third photo 612, 13^{th} photo 653, and 4^{th} photo 613 (for example, to a size of 10% (or some other percentage) of the photos 610a, 651a, 611a, 652a, 612a, 653a, 613a) and display the reduced photos with the 14^{th} photo 654. The controller 210 of the display apparatus 200 may display the received 14^{th} photo 654 on the screen, and reduce the pre-displayed first photo 610, 11^{th} photo 651, second photo 611, 12^{th} photo 652, third photo 612, 13^{th} photo 653, and 4^{th} photo 613 (for example, to a size of 10% (or some other percentage) of the photos 610a, 651a, 611a, 652a, 612a, 653a, 613a) and overlap the reduced photos with one end of the 14^{th} photo 654.

The controller 210 of the display apparatus 200 may display the 14^{th} photo 654 on the screen, and reduce the pre-displayed first photo 610, 11^{th} photo 651, second photo 611, 12^{th} photo 652, third photo 612, 13^{th} photo 653, and 4^{th} photo 613 (for example, to a size of 10% (or some other percentage) of the photos 610a, 651a, 611a, 652a, 612a, 653a, 613a) and overlap the reduced photos with one end of the 14^{th} photo 654.

The controller 210 of the display apparatus 200 may display the reduced first photo 610a, 11^{th} photo 651a, second photo 611a, 12^{th} photo 652a, third photo 612a, 13^{th} photo 653a, and 4^{th} photo 613a on the screen on which the 14^{th} photo 654 is displayed in a set order and/or on one side of a set screen.

In operation S352 of FIG. 3C, an icon corresponding to downloading of a photo of the display apparatus is selected in the first portable apparatus.

Referring to FIG. 6A, the user makes a 21^{st} touch 520 on one of the icons (for example, "TV to mobile" 601b) displayed on the upper end of the application screen 600. The controller 110 may detect the 21^{st} touch 520 using the touch screen 190 and the touch screen controller 195. The controller 110 may calculate a 21^{st} touch location 520a (for example, X21 coordinate and Y21 coordinate) corresponding to the 21^{st} touch 520 using an electric signal received from the touch screen controller 195.

The controller 110 may store 21^{st} touch location information corresponding to the 21^{st} touch location 520a in the storage 175. The stored 21^{st} touch location information may include a touch identifier (ID) for managing history, a touch location, a touch detecting time, or touch information (for example, a touch pressure, a touch direction, a touch holding time, etc.).

The controller 110 of the first portable apparatus 100 may request a thumbnail image list from the display apparatus 200 through the communication unit in response to the 21^{st} touch 520. The controller 210 of the display apparatus 200 may receive the request for the thumbnail image list from the first portable apparatus 100 through the communication unit.

The controller 210 of the display apparatus 200 may generate a thumbnail image list using photos (for example, a displayed photo and/or a reduced photo as shown in FIG. 6A) displayed on the screen of the display apparatus 200 in response to the request for the thumbnail image list. In addition, the controller 210 of the display apparatus 200 may generate a thumbnail image list using photos (for example, including a displayed photo and/or reduced photos as shown in FIG. 6A) stored in the storage 280 of the display apparatus 200 in response to the request for the thumbnail image list.

The controller 210 of the display apparatus 200 may generate the thumbnail image list including corresponding text information (for example, a file name, a name of a portable apparatus to which the files are to be transmitted, a model name of a portable apparatus to which the files are to be transmitted, an SSID of a portable apparatus to which the files are to be transmitted, etc.), and a thumbnail image (for example, 130 pixels X 100 pixels, or some other size). The controller 210 of the display apparatus 200 may generate the thumbnail image list only with the thumbnail image (for example, 130 pixels X 100 pixels, or some other size). The thumbnail image may include metadata (for example, photographing information, person identification information, subject identification information such as information identifying an animal, food, etc.,) corresponding to a photo.

The controller 210 of the display apparatus 200 may generate the thumbnail image list only with the text (e.g., a corresponding textual description) (for example, a file name, a name of a portable apparatus to which the photo is to be transmitted, a model name of the portable apparatus to which the photo is to be transmitted, an SSID of a portable apparatus to which the photo is to be transmitted, etc.).

In addition, the controller 210 of the display apparatus 200 may generate the thumbnail image list excluding the photo received from the first portable apparatus 100. For example, in response to the request for the thumbnail image list being received from the first portable apparatus 100, the controller 210 of the display apparatus 200 may exclude the photo received from the first portable apparatus 100 and generate the thumbnail image list using the photo received from the second portable apparatus 100a. In addition, in response to the request for the thumbnail image list being received from the second portable apparatus 100a, the controller 210 of the display apparatus 200 may exclude the photo received from the second portable apparatus 100a and generate the thumbnail image list using the photo received from the first portable apparatus 100.

The storage 280 may store the generated thumbnail image list under the control of the controller 210. The controller 210 of the display apparatus 200 may transmit the generated thumbnail image list to the first portable apparatus 100 through the communication unit.

In operation S353 of FIG. 3C, the thumbnail image list is displayed on the first portable apparatus 100.

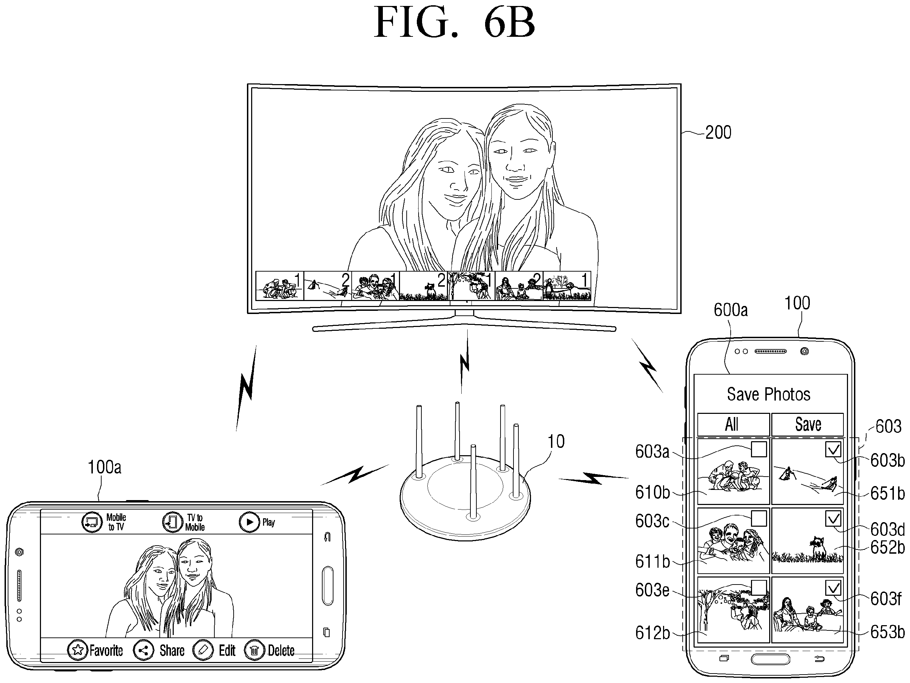

Referring to FIG. 6B, the controller 110 of the first portable apparatus 100 may receive the thumbnail image list from the display apparatus 200 through the communication unit. The storage 175 may store the received thumbnail image list under the control of the controller 110 of the first portable apparatus 100.

The controller 110 of the first portable apparatus 100 may display the received thumbnail image list 603 on an application screen 600a. The controller 110 of the first portable apparatus 100 may display only thumbnail images 610b, 611b, 612b, 651b, 652b, and 653b from the thumbnail image list 603. In addition, the controller 110 of the first portable apparatus 100 may display only the thumbnail images 610b to 653b from the thumbnail image list 603 and selection boxes 603a, 603b, 603c, 603d, 603e, and 603f.

The controller 110 of the first portable apparatus 100 may display the thumbnail images 610b to 653b and corresponding textual information (for example, file names, etc.) corresponding to the thumbnail images 610b to 653b in the thumbnail image list 603. In addition, the controller 110 of the first portable apparatus 100 may display the thumbnail images 610b to 653b, the texts corresponding to the thumbnail images 610b to 653b, and the selection boxes 603a to 603f in the thumbnail image list 603.

In operation S354 of FIG. 3C, one or two or more thumbnail images are selected.

In FIG. 6B, the user may select the selection boxes 603b, 603d, and 603f corresponding to certain thumbnail images (for example, 651b, 652b, and 653b). The controller 110 of the first portable apparatus 100 may display checkmarks in response to the selection boxes 603b, 603d, and 603f being selected.

The controller 110 of the first portable apparatus 100 may request, from the display apparatus 200, downloading of the photos corresponding to the thumbnail images on which the checkmarks are displayed (for example, 651b, 652b, 653b) in response to the selection boxes 603b, 603d, 603f being selected.

The controller 210 of the display apparatus 200 may receive the request for downloading of the photos from the first portable apparatus 100 through the communication unit. The controller 210 of the display apparatus 200 may transmit the photos (for example, 651, 652, 653) stored in the storage 280 of the display apparatus 200 to the first portable apparatus 100 through the communication unit in response to the request for downloading of the thumbnail photos. In addition, the controller 210 of the display apparatus 200 may receive a request for storing the photos in an external storage from the first portable apparatus 100 through the communication unit. The controller 210 of the display apparatus 200 may store the photos (for example, 651, 652, and 653) stored in the storage 280 of the display apparatus 200 in the external storage through the input/output unit 264 in response to the request for storing of the thumbnail photos in the external storage.

In operation S355 of FIG. 3C, the photos downloaded from the display apparatus are stored.

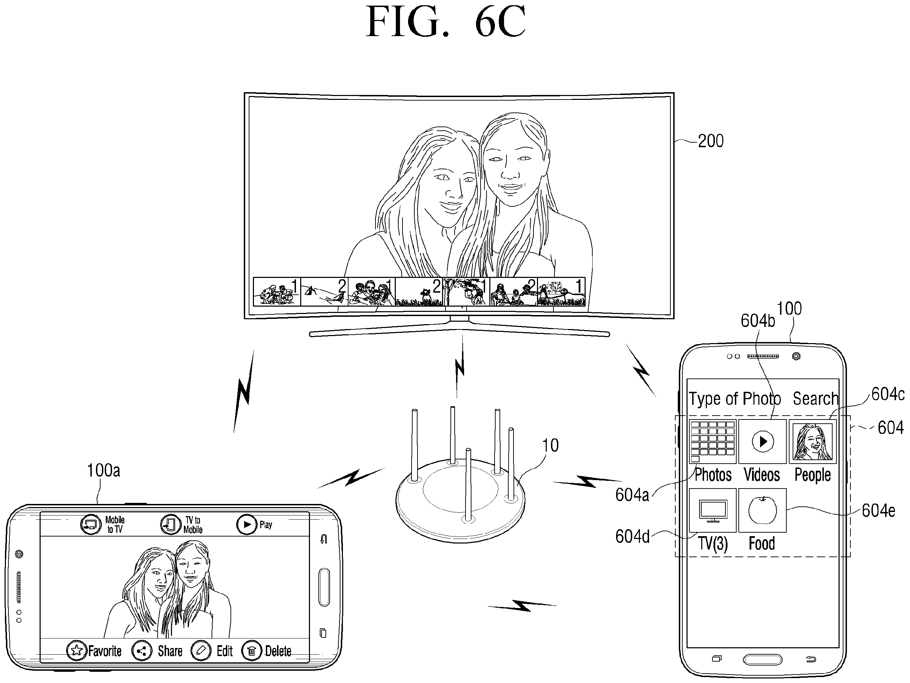

Referring to FIG. 6C, the controller 110 of the first portable apparatus 100 may store the photos (for example, 651, 652, or 653) downloaded from the display apparatus 200 in the storage 175. The storage 175 may include a plurality of storage folders 604, including 604a, 604b, 604c, 604d, and 604e. The controller 110 of the first portable apparatus 100 may store the photos (for example, 651, 652, or 653) downloaded from the display apparatus 200 in one folder, for example, folder 604d having a folder name "TV"(it is understood that the folder name is changeable) of the storage folders (for example, 604a to 604e) of the storage 175.

In response to the photos (for example, 651, 652, and 653) downloaded from the display apparatus 200 being stored in one folder 604d, the controller 110 of the first portable apparatus 100 may display the number of photos downloaded and then stored (for example, "(3)") on one side of the folder 604d.

It will be understood by a person skilled in the art that the downloading of the photos in the first portable apparatus 100 is merely an example and the exemplary embodiments are not limited thereto. For example, the photos may be downloaded into the second portable apparatus 100a.

In operation S355 of FIG. 3C, in response to the photos downloaded from the display apparatus 200 being stored, the photo displaying method of the plurality of portable apparatuses and the display apparatus finishes. In addition, in operation S355 of FIG. 3C, in response to the photos downloaded from the display apparatus 200 being stored, the display apparatus 200 may display a current state regarding the downloaded photos (for example, a notification window or a pop-up window). The portable apparatus may return to a screen to transmit photos to the display apparatus 200.

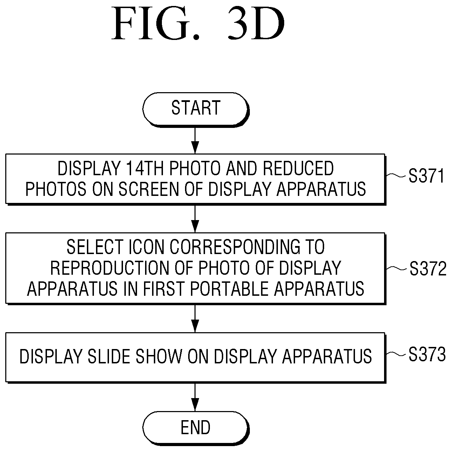

FIG. 3D is a schematic flowchart illustrating a method for displaying a photo of a plurality of portable apparatuses and a display apparatus according to another exemplary embodiment.

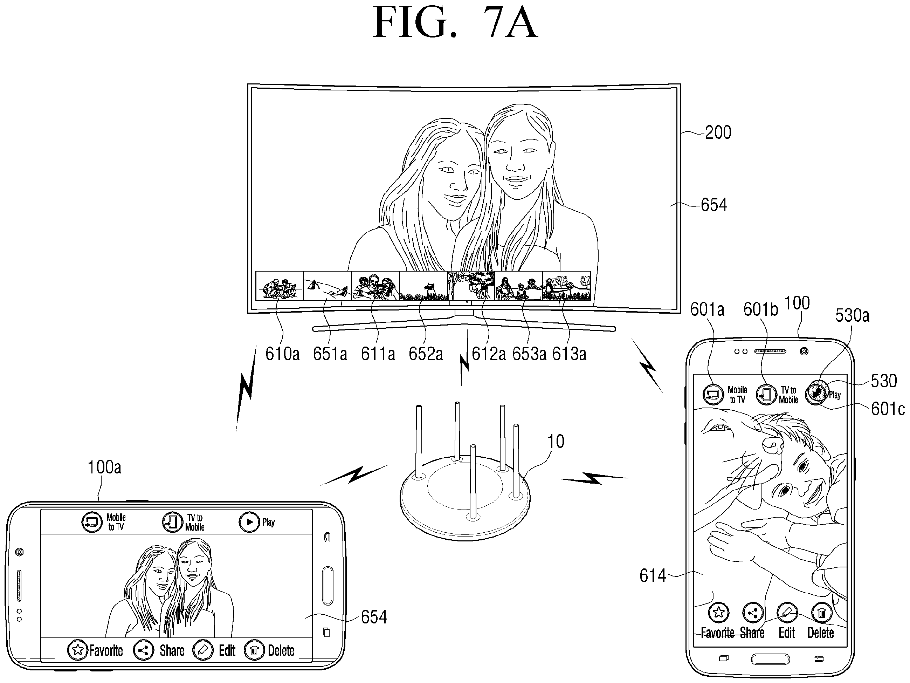

FIGs. 7A to 7C are views showing an example of the method for displaying a photo of the plurality of portable apparatuses and the display apparatus according to another exemplary embodiment.

In operation S371 of FIG. 3D, the 14^{th} screen is displayed on the screen of the display apparatus, and reduced screens are displayed.

Referring to FIG. 7A, the plurality of photos received from the first portable apparatus 100 and the second portable apparatus 100a are displayed on the screen of the display apparatus 200.

The controller 210 of the display apparatus 200 may display the 14^{th} photo 654 on the screen, and reduce the first photo 610, the 11^{th} photo 651, the second photo 611, the 12^{th} photo 652, the third photo 612, the 13^{th} photo 653, and the 4^{th} photo 613 (for example, to a size of 10% (or some other percentage) of the photos, 610a, 651a, 611a, 652a, 612a, 653a, 613a) and display the reduced photos with the 14^{th} photo 654. The controller 210 of the display apparatus 200 may display the 14^{th} photo 654 on the screen, and reduce the first photo 610, the 11^{th} photo 651, the second photo 611, the 12^{th} photo 652, the third photo 612, the 13^{th} photo 653, and the 4^{th} photo 613 (for example, to a size of 10% (or some other percentage) of the photos, 610a, 651a, 611a, 652a, 612a, 653a, 613a) and overlap the reduced photos with one of the 14^{th} photo 654.

The controller 210 of the display apparatus 200 may display the 14^{th} photo 654 on the screen, and reduce the first photo 610, the 11^{th} photo 651, the second photo 611, the 12^{th} photo 652, the third photo 612, the 13^{th} photo 653, and the 4^{th} photo 613 (for example, to a size of 10% (or some other percentage) of the first photo, 610a, 651a, 611a, 652a, 612a, 653a, 613a) and overlap the reduced photos with one of the 14^{th} photo 654.

The controller 210 of the display apparatus 200 may display the reduced first photo 610a, 11^{th} photo 651a, second photo 611a, 12^{th} photo 652a, third photo 612a, 13^{th} photo 653a, and 4^{th} photo 613a on the screen on which the 14^{th} photo 654 is displayed in a set order and/or one side of a set screen.

In operation S372 of FIG. 3D, an icon corresponding to reproduction of the photos of the display apparatus is selected in the first portable apparatus.

Referring to FIG. 7A, the user makes a 31^{st} touch 530 on one of the icons (for example, "play") displayed on the upper end of the application screen 600. The controller 110 may detect the 31^{st} touch 530 using the touch screen 190 and the touch screen controller 195. The controller 110 may calculate a 31^{st} touch location 530a (for example, X31 coordinate and Y31 coordinate) corresponding to the 31^{st} touch 530 using an electric signal received from the touch screen controller 195.

The controller 110 may store 31^{st} touch location information corresponding to the 31^{st} touch location 530a in the storage 175. The stored 31^{st} touch location information may include a touch identifier (ID) for managing history, a touch location, a touch detecting time, or touch information (for example, a touch pressure, a touch direction, a touch holding time, etc.).

In operation S373 of FIG. 3D, a slide show is displayed on the display apparatus.

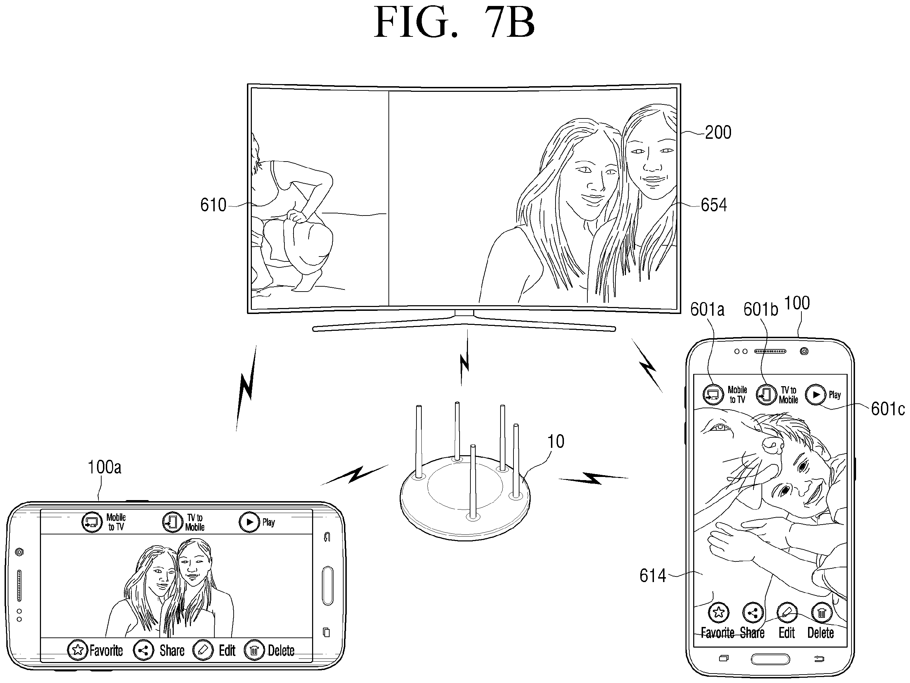

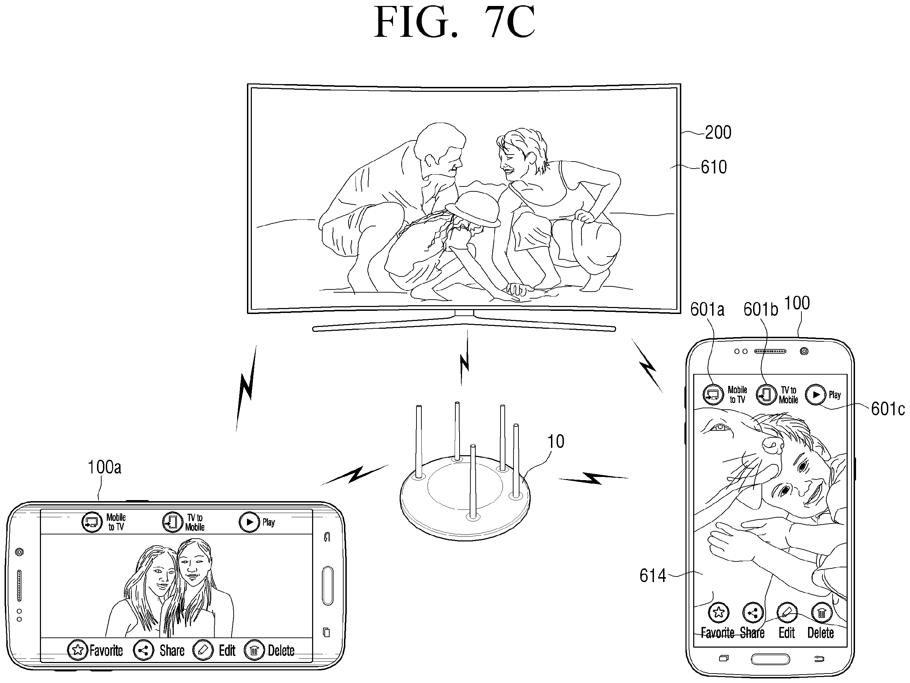

Referring to FIGs. 7B and 7C, the controller 110 of the first portable apparatus 100 may request reproduction of the displayed photos in the display apparatus 200 through the communication unit in response to the 31^{st} touch 530. The controller 210 of the display apparatus 200 may receive the request for the reproduction of the photo from the first portable apparatus 100 through the communication unit. The reproduction of the photos in the display apparatus 200 may include a slide show (for example, displaying photos in sequence) or may request displaying the entire screen.

The controller 210 of the display apparatus 200 may reproduce the photos (for example, a photo and/or reduced photos as shown in FIG. 7A) displayed on the screen of the display apparatus 200 in response to the request for the reproduction of the photos. The controller 210 of the display apparatus 200 may reproduce the photos (for example, a photo and/or reduced photos as shown in FIG. 7A) displayed on the screen of the display apparatus 200 on one side (for example, one of the left, right, upper, and lower portions) in response to the request for the reproduction of the photos.

The controller 210 of the display apparatus 200 may reproduce photos (for example, photos including a displayed photo and/or reduced photos as shown in FIG. 7A) stored in the storage 280 of the display apparatus 200 in response to a request for reproduction of the thumbnail image list.

The controller 210 of the display apparatus 200 may analyze object information such as a person or food which is shown in the photo corresponding to the reproduction request. The controller 210 of the display apparatus 200 may analyze color information included in the photo corresponding to the reproduction request or analyze a season based on a photographing time. The controller 210 of the display apparatus 200 may reproduce the photo by including at least one of a visual effect (for example, a transition effect between photos, text information, addition of an image, etc.) and an auditory effect (for example, background music, etc.) in the slide show using the result of the analyzing.

In addition, in response to the slide show being reproduced, the controller 210 of the display apparatus 200 may store the reproduced slide show in the storage 280 as a corresponding digital file (for example, a file reproducible by a video codec). For example, the extension of the stored digital file (for example, a video file or an HTML file) includes mpeg, mpg, mp4, avi, mov, mkv, html, htm, shtml, etc. The above-described file extensions are merely examples and the exemplary embodiments are not limited thereto.

In operation S373 of FIG. 3D, in response to the photo being reproduced in the display apparatus 200, the photo displaying method of the plurality of portable apparatuses and the display apparatus finishes.

The methods according to exemplary embodiments may be implemented in the form of a program command which is performed through various computer devices and may be recorded on a computer readable medium. The computer readable medium may include program commands, data files, and data structures either alone or in combination. For example, the computer readable medium may include a volatile or non-volatile storage device such as a ROM, a memory such as an RAM, a memory chip, a device or integrated circuit, or a storage medium which can record optically or magnetically and also can be read by a machine (for example, a computer), such as a CD, a DVD, a magnetic disk, or magnetic tape, regardless of whether the computer readable medium can delete or re-record data or not.

A memory which may be included in the portable apparatus is merely an example of way to store a program including instructions to implement the exemplary embodiments or a storage medium which is suitable for storing the programs and is readable by a machine. The program command recorded on the medium may be specially designed or configured for the sake of the present disclosure or may be well known to a person skilled in the computer software and usable thereby.

The foregoing exemplary embodiments and advantages are merely exemplary and are not to be construed as limiting the present disclosure. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Further example embodiments and features are described in the numbered paragraphs below:
[Example 1]. A display apparatus comprising: a display configured to display a photo; a communicator configured to transmit identification information of the display apparatus to a first portable apparatus and a second portable apparatus and to receive the photo; and a controller configured to control the communicator to connect, through an access point, to the first portable apparatus and the second portable apparatus which receive the identification information of the display apparatus, wherein the controller is configured to control to display a first photo which is received from the first portable apparatus through the communicator on the display, after receiving the first photo, control to display a second photo which is received from the second portable apparatus through the communicator on the display, and control to display the first photo and the second photo all together in different sizes.
[Example 2]. The display apparatus of example 1, wherein the controller is configured to reduce the first photo to generate a reduced image of the first photo and control the display to overlap the reduced image of the first photo with a part of the second photo.
[Example 3]. The display apparatus of example 2, wherein, in response to a third photo being received from the first portable apparatus through the communicator, the controller is configured to reduce the second photo to generate a reduced image of the second photo, and control the display to display the received third photo, and overlap the reduced image of the first photo and the reduced image of the second photo with a part of the third photo.
[Example 4]. The display apparatus of examples 2 or 3, wherein, in response to the first photo being received through the communicator, the controller is configured to control the display to display identification information of the first portable apparatus which has transmitted the first photo with the first photo.
[Example 5]. The display apparatus of example 4, wherein the controller is configured to control the display to display identification information of the first portable apparatus which has transmitted the first photo on the reduced image of the first photo.
[Example 6]. The display apparatus of any one of examples 3 to 5, wherein the controller is configured to position the reduced image of the first photo and the reduced image of the second photo on the display according to a predetermined order.
[Example 7]. The display apparatus of any one of examples 3 to 6, wherein the controller is configured to control the display to display identification information of the first portable apparatus which has transmitted the first photo on the reduced image of the first photo, and display identification information of the second portable apparatus which has transmitted the second photo on the reduced image of the second photo.
[Example 8]. The display apparatus of any one of examples 1 to 7, wherein, in response to a request for a thumbnail image list corresponding to the first photo and the second photo being received from the first portable apparatus through the communicator, the controller is configured to control the communicator to transmit the thumbnail image list corresponding to the first photo and the eleventh photo to the first portable apparatus.
[Example 9]. The display apparatus of example 8, wherein, in response to a request for downloading of the first photo and the second photo being received from the first portable apparatus through the communicator, the controller is configured to control the communicator to transmit the first photo and the second photo to the first portable apparatus.
[Example 10]. The display apparatus of any one of examples 1 to 9, wherein, in response to a first request for reproduction of the first photo and a second request for reproduction of the second photo being received from the first portable apparatus through the communicator, the controller is configured to control the display to reproduce the first photo and the second photo as a slide show.
[Example 11]. The display apparatus of any one of examples 1 to 10, wherein the controller is configured to control the display to provide feedback corresponding to the first photo displayed on the display, and wherein the feedback comprises at least one of visual feedback and auditory feedback.
[Example 12]. A method for displaying a photo, the method being performed by a display apparatus and comprising: transmitting identification information of the display apparatus to a first portable apparatus and a second portable apparatus; connecting, through an access point, to the first portable apparatus which receives the identification information of the display apparatus; connecting, through the access point, to the second portable apparatus which receives the identification information of the display apparatus; in response to a first photo being received from the first portable apparatus, displaying the first photo on a display of the display apparatus; and in response to a second photo being received from the second portable apparatus, displaying the second photo on the display on which the first photo is displayed, wherein the displaying the second photo comprises displaying the first photo and the second photo all together in different sizes.
[Example 13]. The method of example 12, further comprising, in response to a third photo being received from the first portable apparatus, displaying the third photo on the display on which the first photo and the second photo are displayed, reducing the second photo to generate a reduced image of the second photo, and displaying the reduced image of the first photo and the reduced image of the second photo to overlap with a part of the third photo.
[Example 14]. The method of examples 12 or 13, wherein the displaying the first photo further comprises displaying identification information of the first portable apparatus which has transmitted the first photo on the display.
[Example 15.] The method of examples 13 or 14, wherein the displaying the second photo further comprises displaying identification information of the first portable apparatus which has transmitted the first photo on the reduced image of the first photo, and displaying identification information of the second portable apparatus which has transmitted the second photo on the reduced image of the second photo.

## Claims

1. A display apparatus (200) comprising:
a display (270);
a communicator (230); and
a controller (210) configured to:
control the communicator (230) to connect, through an access point (10), to a portable apparatus (100),
receive, via the communicator (230), a first photo from the portable apparatus (100),
control the display (270) to display the first photo (610)),
after receiving the first photo, receive, via the communicator (230), a second photo from the portable apparatus (100),
after receiving the second photo, reduce the first photo (610) to generate a reduced image of the first photo (610a), and control the display (270) to display the second photo (611), whereby the first photo and the second photo are displayed all together in different sizes.

2. The display apparatus (200) of claim 1, wherein, in response to the first photo (610) being received through the communicator (230), the controller (210) is configured to control the display (270) to display identification information (200a) of the portable apparatus (100) which has transmitted the first photo.

3. The display apparatus (200) of claim 2, wherein the controller (210) is configured to control the display (270) to display identification information (610a1) of the portable apparatus (100) which has transmitted the first photo (610) on the reduced image of the first photo (610a).

4. The display apparatus (200) of any one of claims 2 to 3, wherein the controller (210) is configured to position the reduced image of the first photo (610a) and the reduced image of the second photo (611a) on the display (270) according to a predetermined order.

5. The display apparatus (200) of any one of claims 2 to 4, wherein the controller (210) is configured to control the display (270) to display identification information (610a1) of the portable apparatus (100) which has transmitted the first photo (610) on the reduced image of the first photo (610a1), and display identification information (611a) of the portable apparatus (100) which has transmitted the second photo (611) on the reduced image of the second photo (611a).

6. The display apparatus (200) of any one of claims 1 to 5, wherein, in response to a request for a thumbnail image list corresponding to the first photo (610) and the second photo (611) being received from the portable apparatus (100) through the communicator (230), the controller (210) is configured to control the communicator to transmit the thumbnail image list corresponding to the first photo and the second photo (611)) to the portable apparatus (100).

7. The display apparatus (200) of claim 6, wherein, in response to a request for downloading of the first photo (610) and the second photo (611) being received from the portable apparatus (100) through the communicator (230), the controller (210) is configured to control the communicator to transmit the first photo and the second photo to the portable apparatus (100).

8. The display apparatus (200) of any one of claims 1 to 7, wherein, in response to a first request for reproduction of the first photo (610) and a second request for reproduction of the second photo (611) being received from the portable apparatus (100) through the communicator (230), the controller (210) is configured to control the display (270) to reproduce the first photo and the second photo as a slide show.

9. The display apparatus (200) of any one of claims 1 to 8, wherein the controller (210) is configured to control the display (270) to provide feedback corresponding to the first photo (610) displayed on the display, and
wherein the feedback comprises at least one of visual feedback and auditory feedback.

10. A method for displaying a photo, the method being performed by a display apparatus (200) and comprising:
connecting to a portable apparatus (100) through an access point (10);
in response to a first photo (610) being received from the portable apparatus (100), displaying the first photo on a display of the display apparatus (100); and
in response to receiving a second photo (611) being received from the portable apparatus (100), reducing the first photo (610) to generate a reduced image of the first photo (610a), displaying the second photo, whereby the first photo and the second photo are displayed all together in different sizes.

11. The method of claim 10, wherein the displaying the first photo (610) further comprises displaying identification information (200a) of the portable apparatus (100) which has transmitted the first photo on the display (270).

12. The method of claim 10 or 11, wherein the displaying the second photo (611) further comprises displaying identification information (610a1) of the portable apparatus (100) which has transmitted the first photo (610) on the reduced image of the first photo (610a), and displaying identification information (611a) of the portable apparatus (100) which has transmitted the second photo on the reduced image of the second photo (611a).
